(19) Europäisches Patentamt / European Patent Office / Office européen des brevets

(11) **EP 2 776 705 B1**

(12) **EUROPÄISCHE PATENTSCHRIFT**

(45) Veröffentlichungstag und Bekanntmachung des Hinweises auf die Patenterteilung:
**04.01.2017 Patentblatt 2017/01**

(21) Anmeldenummer: **12790493.6**

(22) Anmeldetag: **12.11.2012**

(51) Int Cl.:
*F03B 3/10* (2006.01)     *F03B 13/06* (2006.01)
*F03D 9/10* (2016.01)     *F03D 9/14* (2016.01)

(86) Internationale Anmeldenummer:
**PCT/EP2012/072357**

(87) Internationale Veröffentlichungsnummer:
**WO 2013/068577 (16.05.2013 Gazette 2013/20)**

(54) **PUMPSPEICHERKRAFTWERK**

PUMPED-STORAGE POWER PLANT

INSTALLATION DE STOCKAGE D'ÉNERGIE PAR POMPAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.11.2011 DE 102011118206**

(43) Veröffentlichungstag der Anmeldung:
**17.09.2014 Patentblatt 2014/38**

(73) Patentinhaber: **Roentdek Handels GmbH**
**65779 Kelkheim-Ruppertshain (DE)**

(72) Erfinder:
• **SCHMIDT-BÖCKING, Horst**
  **65779 Kelkheim-Ruppertshain (DE)**
• **LUTHER, Gerhard**
  **66119 Saarbrücken (DE)**

(74) Vertreter: **Blumbach Zinngrebe**
**Patentanwälte**
**Alexandrastrasse 5**
**65187 Wiesbaden (DE)**

(56) Entgegenhaltungen:
WO-A1-2009/111861     WO-A1-2011/084164
WO-A2-2011/112561     JP-A- 3 294 662

**Beschreibung**

Gebiet der Erfindung

Die Erfindung betrifft ein Pumpspeicherkraftwerk zum temporären reversiblen Speichern von Energie, insbesondere von zeitlich schwankend zur Verfügung stehender Energie aus Windkraftanlagen und/oder Photovoltaikanlagen, ein Stromversorgungsnetz mit einem Pumpspeicherkraftwerk sowie ein Verfahren zum reversiblen Zwischenspeichern von elektrischer Energie aus Primärenergiekraftwerken.

Hintergrund der Erfindung

Als Folge der über die Erdoberfläche ungleichmäßig verteilten Sonneneinstrahlung entsteht eine bekannte Temperaturverteilung zwischen den Tropen und Subtropen auf der einen Seite und den Polarbereichen auf der anderen Seite. Dieses Energiegefälle ist ursächlich für die bekannten auf der Erde vorherrschenden Großwindsysteme, die einen Großteil der von der Erdoberfläche absorbierten Strahlungsenergie in Form von Wind im Falle der nördlichen Halbkugel u.a. nach Europa, Atlantik, Nordsee etc. transportieren.

Schon seit vielen Jahrhunderten nutzt der Mensch die Kraft des Windes, die im Mittel pro Quadratmeter Fläche einer Energieleistung von etwa 1 Kilowatt entspricht. Diese Energie kann mit Hilfe moderner Windkraftanlagen auch in Form von elektrischer Energie umgewandelt und vielfältig genutzt werden.

Windstärke und Windrichtung unterliegen dabei aber klimatischen und natürlichen Schwankungen, wobei der Wind auch regelmäßig zum Erliegen kommen kann. Eine industrielle Gesellschaft kann aber die Windkraft nur dann als verlässliche Energiequelle verwenden, wenn sie kontinuierlich zur Verfügung steht.

Eine Möglichkeit, eine kontinuierlichere Abgabe der elektrischen Energie an ein Stromversorgungsnetz o.ä. zu erreichen ist es, wenn man einen Teil der so erzeugten elektrischen Energie in ausreichendem Maße über den Zeitraum von zumindest Stunden, ggf. Tagen zwischenspeichern kann. Die Energie aus dem Zwischenspeicher kann dann bei einer Flaute in das Stromversorgungsnetz eingespeist werden, so dass eine kontinuierliche Abgabe gewährleistet ist. Gleiches gilt für elektrische Energie aus Photovoltaikanlagen.

Gelingt eine solche Speicherung in großem Maßstab, so könnten diese regenerativen Energiequellen besser zur Grundlastdeckung eingesetzt werden und eines Tages möglicherweise fossile Energieerzeugung und Kernenergie vollständig ersetzen.

Traditionelle Direktspeicher für Elektrizität, wie Akkumulatoren, können nur vergleichsweise geringe Energiemengen speichern, weisen hohe Speicherverluste auf und sind außerdem sehr teuer und daher im großen Stil wirtschaftlich nicht verwendbar. Die heute häufig diskutierten chemischen Speicherverfahren (z.B. Elektrolyse von Wasser) und Druckluftspeicher haben schon aufgrund der Wärmeverluste eine relativ schlechte Effizienz in der Wiedergewinnung der so gespeicherten Energie. Eine Nutzungseffizienz in der Größenordnung von etwa 30% sind für diese Speicherarten bereits gute Werte.

Daher verbleiben nach heutigem Stand der Technik nur Wasser-Pumpspeicherkraftwerke (PSKW) um effizient und in großem Maße elektrische Energie zu speichern. Diese können eine Wiedergewinnungseffizienz der gespeicherten Energie von etwa 80% erreichen. Bei diesen Anlagen pumpt man Wasser - zumeist an künstlichen Stauseen - in Zeiten des Stromüberflusses aus einem unteren Speicherbecken in ein oberes Speicherbecken. Je größer die Speicherbecken und je größer der Höhenunterschied ist, desto mehr Energie kann man speichern. Bei Strombedarf lässt man das so hochgepumpte Wasser durch Turbinen wieder zurück in den unteren Speicher fließen. Dabei wird die Differenz der potentiellen Energie des Wassers in elektrische Energie umgewandelt. Die Leistung W ergibt sich aus dem Produkt aus Höhenunterschied h zwischen beiden Speicherbecken und der Wasserdurchflussmenge M. Es gilt (bei einer Dichte des Wassers von 1000 kg/m$^3$) die einfache Formel:

$$W \ (kW) = 9{,}81 \cdot M \ (m^3/s) \cdot h \ (m).$$ Damit ergibt sich die Gesamtkapazität des Energiespeichers mit

$$E \ (kWh) = 9{,}81 \cdot M \cdot h \cdot t/3600 \ (Stunden).$$ t ist die maximale Zeitdauer für das Absenken des Wasserspiegels im oberen Speicherbecken in Stunden. Bei einem Pumpspeicherkraftwerk wechseln Pump-, Speicher- und Stromerzeugungsphasen folglich ständig miteinander ab. Die Pumpspeicherkraftwerke können in kürzester Zeit angefahren werden und so schnell auf Strombedarf reagieren. In Deutschland gibt es heute etwa 30 Pumpspeicherkraftwerke, ihre Standorte liegen wegen der benötigten Höhendifferenz im Mittel- oder gar Hochgebirge und die größten Anlagen in Deutschland sind bei Goldisthal / Thüringen (Leistung etwa 1 Gigawatt und Energie-Speicherkapazität etwa 8,5 GWh bei einem Nutzvolumen von etwa 12 Millionen Kubikmeter) und Markersbach / Sachsen (Leistung etwa 1 Gigawatt und Energie-Speicherkapazität etwa 4 GWh). Insgesamt beträgt die Leistung aller Pumpspeicherkraftwerke in Deutschland zusammen etwa knapp 7 Gigawatt.

Der Bedarf an solchen Pumpspeicherkraftwerken übersteigt jedoch das typischerweise vorhandene Potential und vor allem für die Offshore gewonnene Windenergie werden ortsnahe Energiespeicher gebraucht. Diese Kapazitäten auszubauen, ist daher eine wichtige volkswirtschaftliche Aufgabe (siehe z.B. Energie-Forschungszentrum Niedersachsen, Goslar, http://www.efzn.de). Als mögliche Ausbaukapazitäten werden zurzeit die Errichtung neuer Pumpspeicherkraftwerke in Gebirgen und in alten Bergwerken diskutiert. Die Nutzung von unterirdischen Bergwerksanlagen erfordert einen großen überirdischen Wasserspeicher. Dessen Errichtung scheitert oft an vorhandener Wohnbebauung oder anderer gegebener Nutzung. Außerdem sind die vorhandenen Volumina in Bergwerksanlagen klein und über lange unterirdische Strecken verteilt, so dass leistungsfähige Kraftwerke nur schwierig zu realisieren sind. Die Speicherung erfordert ferner teilweise lange Stromtransportwege und einen schmerzhaften Eingriff in den Naturhaushalt. Grundsätzlich ist die Verfügbarkeit von geeigneten Standorten für derartige Pumpspeicherkraftwerke weltweit begrenzt.

Daher wird hier ein völlig anderer, auf den ersten Blick vielleicht unrealistisch erscheinender Ansatz für neue Pumpspeicherkraftwerke vorgestellt.

Die deutsche Patentanmeldung 10 2011 013 329.1 zeigt ein Pumpspeicherkraftwerk mit einem Druckbehälter zum Versenken auf dem Meeresgrund.

Die WO 2011/112561 zeigt ein "Offshore Energy Harvesting, Storage and Power Generation System" mit Energiespeicher- und Stromerzeugungseinheiten, die am Meeresboden verankert werden.

Die WO 2009/111861 offenbart ein weiteres Pumpspeicherkraftwerk nach dem Stand der Technik.

Allgemeine Beschreibung der Erfindung

Es ist eine Aufgabe der Erfindung ein neuartiges Pumpspeicherkraftwerk bereit zu stellen, welches durch einen modularen Aufbau nahezu beliebig skalierbar ist und eine enorme Speicherkapazität zur Verfügung stellen kann, ohne die vorhandene Landschaft zu belasten.

Die Aufgabe der Erfindung wird durch den Gegenstand der unabhängigen Ansprüche gelöst. Vorteilhafte Weiterbildungen der Erfindung sind in den Unteransprüchen definiert.

Die Erfindung nutzt den Grundgedanken, das Meer als oberes Speicherbecken oder Wasserreservoir eines Pumpspeicherkraftwerkes zu nutzen. Als unteres Speicherbecken oder Wasserreservoir dienen auf den Meeresboden abgesenkte Druckbehälter. Das untere Wasserreservoir (dasjenige mit der niedrigeren potentiellen Energie) ist demnach ein künstlich erschaffener Raum, insbesondere ein Hohlraum, der von dem Druckbehälter gebildet wird.

Erfindungsgemäß wird ein Unterwasser-Pumpspeicherkraftwerk zum temporären reversiblen Zwischenspeichern von elektrischer Energie aus anderen Kraftwerken, insbesondere zeitlich schwankend stromerzeugenden Kraftwerken, z.B. Windkraftanlagen oder Photovoltaikanlagen, bereit gestellt. Wie jedes Pumpspeicherkraftwerk benutzt auch dieses Pumpspeicherkraftwerk ein erstes und zweites Wasserreservoir, wobei das Wasser in dem zweiten Wasserreservoir eine höhere potentielle Energie aufweist als in dem ersten Wasserreservoir. Zum temporären reversiblen Speichern der elektrischen Energie wird Wasser von dem ersten Wasserreservoir in das zweite Wasserreservoir gepumpt und zum Wiedergewinnen der elektrischen Energie lässt man das Wasser aus dem zweiten Wasserreservoir in das erste Wasserreservoir zurückfließen, wobei ein Generator die beim "Hochpumpen" deponierte potentielle Energie wieder in elektrische Energie verwandelt. Zum Speichern und Wiedergewinnen der elektrischen Energie kommt es lediglich auf die Differenz der potentiellen Energie einer Wassermenge zwischen den beiden Wasserreservoiren an. Bei einem herkömmlichen Pumpspeicherkraftwerk wird diese durch die Höhendifferenz zwischen den beiden Becken definiert.

Bei der vorliegenden Erfindung wird nun das erste Wasserreservoir mit der niedrigeren potentiellen Energie durch ein Druckspeichersystem aus künstlichen, mit Wasser befüllbaren Druckbehältern gebildet, welches in großer Tiefe auf den Meeresgrund versenkt wird. Das Druckspeichersystem ist dabei derart druckfest gebaut, dass es in der erwünschten Meerestiefe formstabil gegen den hydrostatischen Wasserdruck ist, wenn es leergepumpt wird.

Das zweite Wasserreservoir mit der höheren potentiellen Energie wird durch das Meer selbst gebildet, welches den Druckbehälter umgibt. Wenn man nun Wasser in das in einer Wassertiefe T versenkte Druckspeichersystem einströmen lässt, wird diejenige potentielle Energie frei, welche der Höhendifferenz zur Meeresoberfläche, also der Wassertiefe T entspricht. Pumpt man anschließend das Wasser wieder aus dem Druckspeichersystem gegen den hydrostatischen Druck $P_T$ in der Wassertiefe T in das umgebende Meer, muss man elektrische Energie entsprechend der Wassersäule die auf dem Druckspeichersystem in der Wassertiefe T lastet aufwenden und kann diese somit speichern; selbstverständlich vermindert um die sonst auch üblichen Verlustleistungen.

Da das Wasser aus dem Druckspeichersystem ohne nachströmende atmosphärische Luft herausgepumpt wird, und daher ein nur durch den Partialdruck des Wasserdampfes begrenztes Vakuum entsteht, muss streng genommen der atmosphärische Luftdruck noch zum hydrostatischen Druck der Wassersäule hinzuaddiert werden. Quantitativ spielt dies jedoch bei den hier vornehmlich anvisierten großen Meerestiefen keine Rolle; bei einer Anwendung in einem See mit geringer Tiefe sollte man das zusätzliche Bar des Atmosphärendruck, welches einer zusätzlichen Tiefe von 10 m entspricht, jedoch in die Berechnung einbeziehen.

Mit anderen Worten verbleibt im Inneren des Druckspeichersystems zumindest ein Wasserdampfdruck. Der Wasserdampfdruck im Inneren des Druckspeichersystems ist in der Größenordnung von zirka 100 mbar oder mehr als 100 mbar.

Das Druckspeichersystem des Unterwasser-Pumpspeicherkraftwerks weist zum Speichern des Wassers zumindest zwei mit Wasser befüllbare Druckbehälter auf, welche ein gemeinsames Druckspeichervolumen bilden. Die Druckbehälter können beispielsweise miteinander koppelbar oder fest verbindbar sein, so dass ein modular aufgebautes Druckspeichersystem gebildet ist. Vorzugsweise werden als Druckbehälter leicht zusammensetzbare Module verwendet, wie beispielsweise zylinder- bzw. rohrförmige oder polyeder- bzw. würfelförmige Druckbehälter, die eine gute Volumenausnutzung gewährleisten, wenn mehrere dieser Druckbehälter benachbart aufgestellt werden.

Die Druckbehälter weisen bevorzugt keine beweglichen Teile auf. Das bedeutet, dass keine mechanischen bzw. elektrischen Leistungskomponenten in oder an dem Druckbehälter installiert sind, die zur Stromerzeugung oder Stromvernichtung verwendet werden (Pumpe, Turbine).

Erfindungsgemäß sind die Druckbehälter des Druckspeichersystems über einen Sumpf miteinander verbunden. Der Sumpf bildet den tiefsten oder zumindest einen der tiefsten Punkte des Druckspeichersystems, so dass sich das Wasser, beispielsweise durch einfache Ausnutzung der Schwerkraft, stets im Sumpf sammelt.

Das Druckspeichersystem weist zum Ausströmenlassen des Wassers einen an dem Sumpf angeordneten Wasserauslass mit einer unmittelbar an dem Wasserauslass angeordneten Pumpe auf. Mit der Pumpe wird das Wasser aus dem Druckspeichersystem unmittelbar in das umgebende Meer gegen den der Wassertiefe entsprechenden hydrostatischen Druck PT gepumpt, wobei die Pumpe elektrische Energie in die der verdrängten Wassersäule entsprechende potentielle Energie umwandelt.

Bei dem Auspumpvorgang des Wassers aus dem Druckspeichersystem ist zur Vermeidung von Kavitationsvorgängen an der Pumpe ein an der Pumpe anliegender Rest-Vordruck im Druckspeichersystem vorteilhaft. So zeigen Berechnungen, dass ohne nachströmende atmosphärische Luft, oder ein anderes Gas, eine an der Pumpe anliegende Wassersäule von 15 Metern ausreicht, um die Kavitation zu verringern oder sogar zu vermeiden. Demgemäß ist es von Vorteil, diese Größe in die Bauform des Druckspeichersystems bzw. in die Anbringung des Wasserballasts einfließen zu lassen. Ggf. ist es aus diesem Grund auch vorteilhaft, jeden Druckbehälter mit einer Vorpumpe auszurüsten, die für die Pumpe einen Vordruck erzeugt.

Die Bauform des Druckspeichersystems kann also derart ausgeführt sein, dass die Pumpe im Bereich des Sumpfes angeordnet wird und die in dem Unterwasser-Pumpspeicherkraftwerk herrschende Wassersäule zzgl. des Dampfdrucks einen Wassersäulenvordruck von äquivalent zirka 15 Metern Wassersäule an der Pumpe erzeugt. Dieser Vordruck ist besonders vorteilhaft, da hierdurch derzeit handelsübliche großtechnische Pumpen eingesetzt werden können. Darüber hinaus kann beim Anliegen eines Wassersäulenvordruck an der Pumpe von derzeit mindestens 15 Metern auf eine Belüftung des Druckbehälters verzichtet werden.

Das Unterwasser-Pumpspeicherkraftwerk weist ferner einen Wassereinlass mit einem unmittelbar an dem Wassereinlass angeordneten Generator auf. Vorzugsweise wird ein gemeinsamer Generator für die zumindest zwei bzw. alle Druckbehälter verwendet, so dass der gemeinsame Generator im Stromerzeugungsbetrieb über den Wassereinlass die von dem Druckspeichersystem umfassten zumindest zwei Druckbehälter füllt, vorzugsweise gleichmäßig. Beim Einströmenlassen des Wassers unmittelbar aus dem umgebenden Meer mit dem der Wassertiefe entsprechenden hydrostatischen Druck in das Druckspeichersystem wandelt der Generator die potentielle Energie der zuvor verdrängten Wassersäule wieder in entsprechende elektrische Energie um. Das Druckspeichersystem weist ferner Ventile am Einlass und Auslass auf, um diese zu verschließen, wenn nicht gerade Energie gespeichert, beziehungsweise zurück gewonnen wird. Das Auspumpen und Einströmen des Wassers erfolgt demnach lediglich auf kurzem Weg in das bis auf den Wassereinlass und Wasserauslass geschlossene Druckspeichersystem.

Wenn man demnach das Druckspeichersystem in einer Tiefe von z.B. 2000 m unter der Meeresoberfläche versenkt, entspricht dies einem Pumpspeicherkraftwerk, bei welchem das zweite Wasserreservoir 2000 m oberhalb des ersten Wasserreservoirs liegt, was für übliche Pumpspeicherkraftwerke bereits ein außergewöhnlich großer Höhenunterschied ist. Verblüffenderweise benötigt man trotzdem keine langen Rohre um das zum Speichern der elektrischen Energie verwendete Wasser über eine Strecke von 2000 m (bei ungleich 90° Steigung sogar noch mehr) zu transportieren. Es genügt nämlich, das Wasser vom Inneren des Druckspeichersystems lediglich nach außen in das umgebende Meer zu pumpen, was nur eine Strecke von einigen wenigen Metern bedeutet und entsprechend wieder zurückströmen zu lassen. Bereits auf dieser kurzen Pumpstrecke wird die nur durch die Druckunterschiede aufgebaute Potentialdifferenz überwunden. Die von der Gravitation verursachte Potentialdifferenz wird nämlich ohne Überwindung dieser Wegstrecke allein durch die in der Wassertiefe T auf dem Druckbehälter lastende Wassersäule aufgebracht. Es werden daher weder Rohre zum Transport von Wasser noch Luftleitungen zwischen dem Druckbehälter und der Meeresoberfläche benötigt. Man nutzt einfach die Potentialdifferenz der Meerestiefe in Relation zum Innendruck des Druckspeichersystems, wobei nicht ausgeschlossen sein soll, dass das Pumpspeicherkraftwerk in einem tiefen Binnensee versenkt wird. Man benötigt daher lediglich elektrische Leitungen zum Transport der elektrischen Energie von der Meersoberfläche zu dem Druckspeichersystem und zurück.

Mit der Erfindung wird darüber hinaus eines der zwei Speicherbecken oder definierten Wasserreservoire völlig "eingespart", da das umgebende Meer selbst das zweite Wasserreservoir (mit der höheren potentiellen Energie) bildet. Das erste Wasserreservoir wird von dem Innenraum des Druckspeichersystems in Form von insbesondere modular koppelbaren Druckbehältern oder Drucktanks gebildet. Somit bilden die Drucktanks ein abgeschlossenes Wasser-Speichervolumen, nämlich dasjenige Wasser-Speichervolumen oder Wasserreservoir mit der niedrigeren potentiellen Energie gegenüber dem umgebenden Meer. Dadurch werden lange Wasserrohre, die bei herkömmlichen Pumpspeicherkraftwerken die Höhendifferenz überbrücken müssen, eingespart. Dies vereinfacht nicht nur den Aufbau, sondern es werden auch Reibungsverluste beim Transport des Wassers reduziert, wodurch der Wirkungsgrad erhöht werden kann. Ferner kann das Druckspeichervolumen derart modular gebildet sein, dass derartige Druckbehälter in großer Zahl auf dem Meeresgrund versenkt werden und miteinander gekoppelt werden, um ein hinreichend großes Wasser-Speichervolumen und damit die erwünschte Energie-Speicherkapazität zu erreichen ohne die oberirdisch nutzbare Landschaft zu belegen. Bei einer Vielzahl von Druckbehältern verwenden diese somit die gemeinsame(n) Pumpe(n) und gemeinsame(n) Generator(en), so dass die Druckbehälter ein gemeinsames Druckspeichervolumen bilden und mehrere Pumpen und/oder Generatoren eingespart werden können.

Es kann auch eine Vielzahl solcher Pumpspeicherkraftwerke auf dem Meeresboden installiert sein. Vorzugsweise umfasst ein solches Netz aus Unterwasser-Pumpspeicherkraftwerken demnach eine Mehrzahl von auf dem Meeresgrund befindlichen Druckspeichersystemen, welche auf dem Meeresgrund mit einem Netzwerk aus elektrischen Leitungen elektrisch miteinander verbunden sind. Eine Vernetzung mit Wasserrohren zwischen den jeweils mit eigener Pumpe und Generator ausgestatteten Druckspeichersystemen ist nicht notwendig.

Die Installation eines Druckspeichersystems weist vielfältige Vorzüge auf. Zum Einen lässt sich so ein modular aufbaubares Pumpspeicherkraftwerk bereitstellen, welches eine an den Verwendungszweck und Einsatzort angepasste Größe aufweist und somit geringere Kosten verursacht. Des Weiteren ist die Auswahl und Konstruktion von geeigneten Druckbehältern vereinfacht, da bauseitig (der Druckbehälter ist ein Bauwerk mit im gefüllten Zustand erheblichem Eigengewicht) und konstruktiv optimale Druckbehälter verwendet werden können und darüber hinaus das Druckspeichervolumen an die Leistungsfähigkeit geeigneter Pump- und Turbinenaggregate angepasst werden kann. Mehrere Druckbehälter lassen sich demnach hydraulisch zu einem Druckspeichersystem zusammenschalten und die Befüllung und Entleerung erfolgt nur an einem einzigen Punkt. Natürlich müssen die hydraulischen Verbindungen so beschaffen sein, dass ein unbehindertes Zu- und Abfließen des Wassers ermöglicht wird.

Vorzugsweise weist die Verbindung der Druckbehälter mit dem Sumpf zumindest ein Absperrventil zum Trennen zumindest eines der Druckbehälter vom Druckspeichersystem auf, so dass auch ein einzelner Druckbehälter für Wartungszwecke oder bei Leckagen vom übrigen Druckspeichersystem getrennt werden kann.

Die Modularität des Unterwasser-Pumpspeicherkraftwerks kann dadurch weiter gesteigert werden, dass eine Pumpturbineneinheit vorgesehen wird, die insbesondere den Wassereinlass, den Wasserauslass, die gemeinsame Pumpe und den Generator sowie die zur Verbindung mit den elektrischen Leitungen nötige Elektroinstallation beherbergt.

Die Pumpturbineneinheit ist insbesondere von den übrigen Komponenten, wie beispielsweise dem Druckspeichersystem des Unterwasser-Pumpspeicherkraftwerks, abkoppelbar. Die abkoppelbare Pumpturbineneinheit kann somit getrennt beispielsweise zu Wartungszwecken zur Wasseroberfläche geholt werden.

Das Druckspeichersystem sollte ein Volumen aufweisen, welches eine signifikante Energiespeicherung ermöglicht, das Druckspeichervolumen sollte daher mindestens 100 oder 1000 Kubikmeter betragen, kann aber um ein Vielfaches, ggf. mehrere Größenordnungen größer sein. Es sind sogar Volumina im Bereich von einer Million Kubikmeter oder mehr denkbar. Je größer die einzelnen Druckbehälter sind, umso geringer ist die benötigte Anzahl.

Beispielsweise können große industriell gefertigte Zylinderrohre oder auch elementare Kugeltanks als Druckbehälter verwendet werden. Ein Kugeltank mit 100 Metern Durchmesser hat ein Volumen von etwa 500.000 Kubikmeter. Lässt man 50 Kubikmeter Wasser pro Sekunde durch die Turbinen strömen, dann liefert dieses Pumpspeicherkraftwerk bei 2000 m Wassertiefe eine Leistung von etwa 1 Gigawatt für eine Zeitdauer von etwa 3 Stunden. Durch die Verbindung von mehreren solcher Zylinderrohre oder elementaren Kugeltanks zu einem Druckspeichersystem kann entweder diese Leistung entsprechend erhöht oder eine noch größere Speicherkapazität erreicht werden. Die Speicherung von regenerativ erzeugter Energie ist hiermit in großen Mengen und ohne nennenswerte Verluste möglich.

Zweckmäßigerweise bestehen die Druckbehälter aus Stahl und/oder Beton, insbesondere Faserbeton, d.h. weisen eine entsprechende dreidimensional geschlossene Außenwandung z.B. aus Stahl- oder Faserbeton auf. Hiermit lässt sich ein hinreichend druckfester Druckbehälter bzw. Hohlkörper bauen. Eine mögliche Bauform des Druckbehälters weist beispielsweise ein inneres Tragwerk zur Stützung gegen den Wasserdruck auf, wobei das innere Tragwerk nicht den Abfluss des Wassers in dem Druckbehälter hin zum Sumpf behindern sollte.

Vorzugsweise wird der Druckbehälter so massiv gebaut bzw. beschwert, dass er im ausgepumpten Zustand im Normalbetrieb eine Masse hat, die etwas größer ist, als die Masse des von dem Druckbehälter verdrängten Wassers, so dass der Druckbehälter auch im ausgepumpten Zustand im Normalbetrieb im Meer nach unten sinkt, so dass sich der Verankerungsaufwand auf dem Meeresgrund in Grenzen hält. Ggf. kann der Druckbehälter sogar ohne wesentliche Verankerung einfach auf dem Meeresgrund liegen, wenn er in jedem Füllzustand im Normalbetrieb schwer genug ist. Dennoch soll nicht ausgeschlossen sein, dass der Druckbehälter geringfügig leichter als das verdrängte Wasser ist und der Druckbehälter am Meeresgrund verankert wird.

In vorteilhafter Weise weisen die Druckbehälter des Druckspeichersystems separate Hohlräume auf, z.B. in der Umwandung, wobei Schüttgut als Beschwerungsmaterial in die Hohlräume eingefüllt werden kann. Hiermit kann die Masse des Druckspeichersystems im Nachhinein noch angepasst werden, um sie so zu beschweren, dass sie auf den Meeresgrund sinken. Besonders vorteilhaft ist es aber, die Hohlräume mit dem Schüttgut zunächst so auszutarieren, dass das Druckspeichersystem und/oder der Bodenkörper gerade noch schwimmt und dann vor Ort auf dem Meer zusätzliches Ballastwasser einzufüllen. Das Beschwerungsmaterial kann in kostengünstiger Weise natürliches Schüttgut sein, z.B. Sand, Kies, Schlick oder Ähnliches, dessen Masse vor Ort mit in das Schüttgut eingebrachtem Wasser zusätzlich vergrößert werden kann, um die Masse vor Ort noch genauer auszutarieren. Durch das Einbringen von Ballastwasser in das Schüttgut kann die Masse soweit erhöht werden, dass das Pumpspeicherkraftwerk versinkt, es können aber auch separate Hohlräume mit Ballastwasser gefüllt werden, damit das Ballastwasser einfacher wieder herausgepumpt werden kann, um das ganze Pumpspeicherkraft oder auch nur einzelne Komponenten des Pumpspeicherkraftwerks wieder aufzuholen. Der Gesamt-Ballast ist jedenfalls so bemessen, dass er das Pumpspeicherkraftwerk im Normalbetrieb auf dem Meeresgrund hält. Die Gewichtsverteilung, z.B. die Anordnung des Ballasts kann asymmetrisch sein, damit der einzelne Druckbehälter des Druckspeichersystems bzw. das ganze Unterwasser-Pumpspeicherkraftwerk unter Wasser eine definierte Orientierung mit Unter- und Oberseite aufweist, was ggf. die Anordnung der Anschlüsse erleichtert. Die definierte Orientierung des Druckbehälters. bzw. des Pumpspeicherkraftwerks kann auch dadurch erreicht werden, dass Hohlräume nicht mit Ballast gefüllt werden, so dass die darin befindliche Luft Auftrieb erzeugt.

Beispielsweise kann der Druckbehälter eine Wasserverdrängung von mehr als 50.000 m$^3$, bevorzugt mehr als 100.000 m$^3$ und besonders bevorzugt mehr als 500.000 m$^3$ aufweisen. Bei einer Wasserverdrängung von 500.000 m$^3$ kann der Druckbehälter ein schwimmfähiges Leergewicht von maximal 500.000 Tonnen aufweisen, so dass eine Unterschreitung des schwimmfähigen Leergewichts einem Auftriebskörper entspricht, sobald aber das maximal schwimmfähige Leergewicht überschritten wird, sinkt der Druckbehälter.

Der Druckbehälter hat vorzugsweise eine zylindrische Form. Bei einer zylindrischen Form kann das Innenvolumen bei gleichbleibendem Durchmesser durch die Länge des Zylinders eingestellt werden, was konstruktiv ggf. einfacher ist, als eine Kugelform mit großem Durchmesser herzustellen. Der Zylinder ist an seinem oberen Ende mit einem oberen Abschlussstück beispielsweise in Form eines Deckels versehen, so dass das obere Ende gegen in den Druckbehälter eindringendes Meerwasser abgedichtet ist. Das untere Ende (Sumpf) kann ebenfalls mit einem Deckel versehen sein, um ein geschlossenes Volumen zu bilden.

Besonders bevorzugt umfasst der Druckbehälter eine Anschlusskupplung. Mittels der Anschlusskupplung können zwei damit ausgerüstete Druckbehälter miteinander lösbar gekoppelt werden, so dass das Druckspeichervolumen modular aufbaubar ist. Die Anschlusskupplung ist vorzugsweise selbstdichtend ausgerüstet und kann bei einem zylindrischen Druckbehälter beispielsweise in dem Deckel angeordnet sein, so dass mehrere Druckbehälter aufrecht stehend übereinander auf dem Meeresboden angekuppelt werden können.

Der Druckbehälter kann auch aus einer Mehrzahl von aneinandergereihten und miteinander verbundenen rohrförmigen Segmenten bestehen. In einem einfachen Fall sind die Segmente miteinander verschweißte, verklebte oder vergossene Rohrstücke, deren Wandstärke so gewählt wird, dass der Wasserdruck am Meeresgrund den Druckbehälter nicht verformt. So können beispielsweise Rohrsegmente von je 10 Metern Länge einzeln zum Installationsort transportiert werden und dort auf See miteinander zu Rohren von beispielsweise 100 Metern Länge verbunden werden, welche mit Deckeln versehen und aufrecht auf dem Meeresgrund verankert werden. Die Rohrsegmente können auch jeweils eigene Deckel aufweisen und miteinander über selbstdichtende Anschlusskupplungen angekuppelt werden, so dass ebenfalls ein gemeinsames Druckspeichervolumen gebildet wird.

In einer besonders bevorzugten Ausführungsform wird ein integrierter Druckspeicherkomplex aus eng benachbarten, aufrecht stehenden Rohren, insbesondere Stahlrohre, Rohre aus Faserbeton oder anderen Verbundwerkstoffen, gebildet. Die zwischen den Rohren gebildeten Hohlräume können zur Stabilisierung des Druckspeicherkomplexes und zur Beschwerung des Druckspeichersystems mit einer Füllmasse verfüllt werden. Die Füllmasse kann dabei Beton, Schüttgut oder eine Kunststoffmasse oder eine Kombination der genannten sein.

Der Druckbehälter oder der integrierte Druckspeicherkomplex weist in einer Ausführungsform ein oberes Abschlussstück zum Verschließen des Druckbehälters bzw. der mehreren Druckbehälter des integrierten Druckspeicherkomplexes und zum Abdichten gegen eindringendes Meerwasser in den Druckbehälter auf.

Erfindungsgemäß sind die Druckbehälter des Druckspeichersystems an einen Bodenkörper angekoppelt bzw. mit diesem verbunden, wobei der Bodenkörper die Druckbehälter sowie die weiteren Komponenten des Pumpspeicherkraftwerks, also insbesondere die Pumpe und den Generator, in modularer Weise aufnehmen kann. Hierbei ist die Verbindung der Druckbehälter mit der gemeinsamen Pumpe durch einen integralen Kanal im Inneren des Bodenkörpers gebildet, so dass die Druckbehälter über den Bodenkörper miteinander verbunden sind, so dass nach der Montage der Druckbehälter an dem Bodenkörper ein gemeinsamer Druckbehälterraum aus den verbundenen Druckbehältern über den Bodenkörper entsteht. Bevorzugt sind hierbei die Pumpe und der gemeinsame Generator in einer Pumpturbineneinheit angeordnet, und besonders bevorzugt ist die Pumpturbineneinheit auch modular von dem Bodenkörper abkoppelbar. Der hochmodulare Aufbau des Unterwasser-Pumpspeicherkraftwerks mit einem Bodenkörper, einer abkoppelbaren Pumpturbineneinheit sowie abkoppelbaren Druckbehältern ermöglicht eine einfache Anpassung der Komponenten an die an die Stromspeicherung gestellten Anforderungen sowie eine Reduzierung der Kosten bei Installation und Wartung des Kraftwerks. Beispielsweise ist davon auszugehen, dass die Komponenten der Pumpturbineneinheit eine kürzere Haltbarkeit aufweisen als die Druckbehälter oder der Bodenkörper.

Der Bodenkörper ist ferner bevorzugt derart ausgeführt, dass die für die Pumpe vorteilhafte Wassersäule zur Erzeugung des Pumpvordrucks im Bodenkörper selbst bereitgestellt wird. Hierfür kann besonders der integrale Kanal im Inneren des Bodenkörpers entsprechend geformt bzw. eine genügend große Länge aufweisen, dass die Wassersäule bereits in dem integralen Kanal erreicht wird. Dadurch kann das Volumen im Druckbehälter vollständig oder überwiegend ausgenutzt, also insbesondere entleert werden.

Der Bodenkörper weist vorzugsweise Füße zur stabilen und sicheren Auflage des Bodenkörpers auf dem Meeresgrund auf. Je nach gewählter Bauform des Bodenkörpers und der Zusammensetzung des Meeresbodens können 2, 3 oder mehr Füße vorteilhaft sein.

Werden die Druckbehälter und/oder der Bodenkörper mit den selbstdichtenden Anschlusskupplungen ausgerüstet, so ist es möglich, die Druckbehälter lösbar mit dem Bodenkörper und/oder unmittelbar mit weiteren Druckbehältern zu verbinden. Auch die Pumpturbineneinheit kann mit einer Anschlusskupplung ausgerüstet sein, so dass sie vom Bodenkörper abgekoppelt und zu Wartungszwecken getrennt an die Oberfläche geholt werden kann. Dies vereinfacht den modularen Aufbau und eine ggf. vorgesehene Erweiterung oder Verkleinerung des Druckspeichervolumens.

Zur Erhöhung der Zuverlässigkeit des Unterwasser-Pumpspeicherkraftwerks kann der Bodenkörper oder die Pumpturbineneinheit redundante Pumpen und Ventile und/oder eine Reinigungseinrichtung zur automatischen Reinigung der Wassereinlässe und Wasserauslässe umfassen.

Auch der Bodenkörper kann separate Hohlräume aufweisen, z.B. in der Umwandung, wobei Schüttgut als Beschwerungsmaterial in die Hohlräume eingefüllt werden kann.

Gemäß einer bevorzugten Ausführungsform der Erfindung weist der Druckbehälter einen im Normalbetrieb nicht zum Energiespeichern verwendeten zusätzlichen Wasserspeicherbereich auf, welcher leergepumpt werden kann, um die Masse des Speicherreservoirs derart zu verkleinern, dass es vom Meeresgrund an die Meeresoberfläche aufgeholt werden kann. Dieser zusätzliche Wasserspeicherbereich kann entweder dadurch geschaffen werden, dass die Hauptkavität im Normalbetrieb nicht vollständig leergepumpt wird, es können aber auch ein oder mehrere separate Hohlräume, ggf. in der Behälterwandung, hierfür vorhanden sein. Somit kann durch das Leerpumpen des zusätzlichen Wasserspeicherbereichs die Masse des Druckbehälter und/oder des Bodenkörpers soweit reduziert werden, dass der Druckbehälter von selbst auftaucht oder zumindest mit einem Seil aufgeholt werden kann. Der Druckbehälter, der das Wasser-Speichervolumen mit der niedrigeren potentiellen Energie bildet, ist demnach auf den Meeresgrund absenkbar und wieder zur Wasseroberfläche aufholbar. In vorteilhafter Weise können somit regelmäßig Wartungs- oder Reparaturarbeiten an der Oberfläche durchgeführt werden.

Zweckmäßig hat der Druckbehälter die Form eines Zylinders oder eines Polyeders. Der Druckbehälter kann jedoch auch in Form einer Kugel oder eines Torus aus einem in sich selbst geschlossenen Ring aus druckfesten Rohren, ggf. mit gewölbten Endflächen ausgebildet sein. Ein Torus hat den Vorteil, dass er auf dem Meeresgrund nicht wegrollen kann. Der integrierte Druckspeicherkomplex hat ebenfalls zweckmäßigerweise die Form eines Zylinders oder eines Polyeders. Bautechnisch, insbesondere zur Erlangung eines tiefen Schwerpunkts des Druckspeichersystems, oder zur Aussteifung von Verankerungspunkten, kann auch eine andere Form wie ein aufrecht stehendes Trapez für den integrierten Druckspeicherkomplex zweckmäßig sein. Besonders bevorzugt ist die Bauform so gewählt, dass ein Faserbeton und/oder ein Schleudergussverfahren zur Herstellung der Druckbehälter und/oder des integrierten Druckspeicherkomplexes angewendet werden kann.

Der Wassereinlass und Wasserauslass können getrennt oder kombiniert ausgebildet sein. In letzterem Fall sind Pumpe und Generator vorzugsweise als eine gemeinsame Pumpturbine ausgebildet. In diesem Fall genügt ggf. ein gemeinsames Ventil am kombinierten Wassereinlass und Wasserauslass, wodurch die Anzahl der Ventile reduziert wird, wobei nichtsdestotrotz eine Mehrzahl an Pumpturbinen vorhanden sein kann.

Mit dem erfindungsgemäßen Unterwasser-Pumpspeicherkraftwerk kann somit ein Stromversorgungsnetz geschaffen werden, welches Folgendes umfasst:

Eine Vielzahl von Primärenergiekraftwerken, die zeitlich schwankend elektrische Energie erzeugen, insbesondere Windkraft- und/oder Photovoltaikanlagen,
ein oder mehrere erfindungsgemäße Unterwasser-Pumpspeicherkraftwerke,
eine Vielzahl von Verbrauchsstellen für elektrische Energie und
ein elektrisches Leitungsnetz, welches die Verbrauchsstellen, die Unterwasser-Pumpspeicherkraftwerke und die Primärenergiekraftwerke miteinander verbindet, so dass die von den Primärenergiekraftwerken erzeugte elektrische Energie zu Zeiten eines Energieüberschusses aus den Kraftwerken von den Unterwasser-Pumpspeicherkraftwerken reversibel zwischengespeichert und zu Zeiten hohen Bedarfs an elektrischer Energie zurückgewonnen und die zurückgewonnene elektrische Energie zu den Verbrauchsstellen geleitet werden kann.

Im Folgenden wird die Erfindung anhand von Ausführungsbeispielen und unter Bezugnahme auf die Figuren näher erläutert, wobei gleiche und ähnliche Elemente teilweise mit gleichen Bezugzeichen versehen sind und die Merkmale der verschiedenen Ausführungsbeispiele miteinander kombiniert werden können.

Kurzbeschreibung der Figuren

Es zeigen:

Fig. 1     eine schematische Darstellung eines erfindungsgemäßen Unterwasser-Pumpspeicherkraftwerks mit Windkraftanlage und Verbraucher,

Fig. 2     eine schematische Darstellung einer Ausführungsform des Unterwasser-Pumpspeicherkraftwerks mit mehreren Druckbehältern,

Fig. 3     eine Seitenansicht der mit Fig. 2 gezeigten Ausführungsform des Unterwasser-Pumpspeicherkraftwerks

Fig. 4     eine schematische Darstellung einer Ausführungsform des integralen Druckspeicherkomplexes,

Fig. 5     eine schematische Darstellung einer weiteren Ausführungsform des integralen Druckspeicherkomplexes

Fig. 6     die Seitenansicht eines integralen Druckspeicherkomplexes mit Druckbehälterverbindung,

Fig. 7     eine Ausführungsform des Pumpspeicherkraftwerks mit mehreren integralen Druckspeicherkomplexen,

Fig. 8     eine schematische Darstellung einer weiteren Ausführungsform des Unterwasser-Pumpspeicherkraftwerks mit einem Bodenkörper und einer Pumpturbineneinheit,

Fig. 9     eine schematische Darstellung des Unterwasser-Pumpspeicherkraftwerks aus Fig. 8 mit angekoppelten Druckbehältern,

Fig. 10    eine schematische Darstellung einer Ausführungsform des integralen Druckspeicherkomplexes,

Fig. 11    eine schematische Darstellung einer weiteren Ausführungsform des integralen Druckspeicherkomplexes,

Fig. 12    eine schematische Darstellung eines Rohbaus eines Bodenkörpers,

Fig. 13    der in Fig. 12 gezeigte Bodenkörper mit Füllmasse und vorbereiteten Hohlräumen,

Fig. 14    der in Fig. 13 gezeigte Bodenkörper mit zusätzlichen Druckbehältern,

Fig. 15    eine schematische Darstellung einer weiteren Ausführungsform des Unterwasser-Pumpspeicherkraftwerks mit zwei Pumpturbineneinheiten,

Fig. 16    eine schematische Darstellung noch einer weiteren Ausführungsform des Unterwasser-Pumpspeicherkraftwerks mit runden Druckbehältern.

Detaillierte Beschreibung der Erfindung

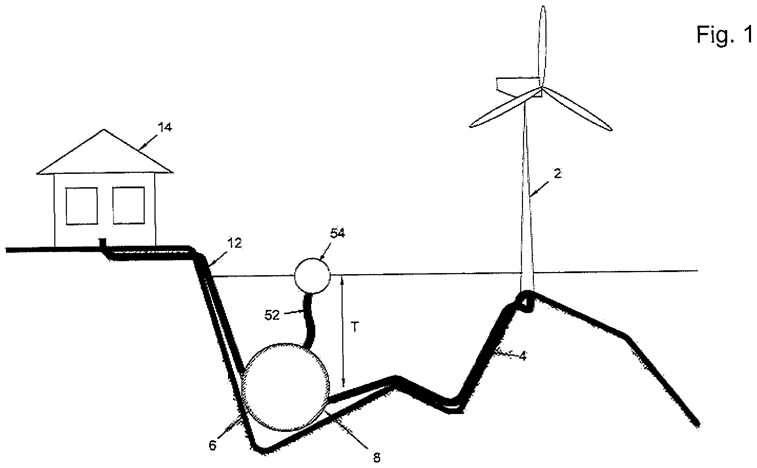

Bezug nehmend auf Fig. 1 wird zunächst als Überblick schematisch der grundsätzliche Aufbau der elektrischen Vernetzung des Pumpspeicherkraftwerks 6 gezeigt. Elektrische Energie wird symbolisch mittels eines bestimmten elektrischen Kraftwerks, in diesem Beispiel eines Windkraftwerks 2 erzeugt. Das Windkraftwerk 2 ist mit einer Stromleitung 4 mit dem Pumpspeicherkraftwerk 6 verbunden, um die elektrische Energie aus dem Primärkraftwerk zu dem Pumpspeicherkraft 6 zu leiten. Das Pumpspeicherkraftwerk 6 liegt in einer Wassertiefe T, welche je nach den vorhandenen geographischen Gegebenheiten einige hundert bis einige tausend Meter betragen kann, auf dem Meeresgrund 8. Das Pumpspeicherkraftwerk 6 ist ferner mit einer Stromleitung 12 mit einem Verbraucher 14 verbunden, um die elektrische Energie aus dem Pumpspeicherkraftwerk 6 zu dem Verbraucher zu leiten.

Es ist ersichtlich, dass das dargestellte Windkraftwerk 2 stellvertretend für eine Vielzahl von Windkraftwerken stehen kann und auch andere regenerative fluktuierende Kraftwerke wie Photovoltaik-Anlagen etc. zum Einsatz kommen können. Ferner steht der Verbraucher 14 stellvertretend für eine Vielzahl von Verbrauchern, die an den vorhandenen Teil des allgemeinen Stromversorgungsnetzes angeschlossen sind, in welches die zurückgewonnene elektrische Energie aus dem Pumpspeicherkraftwerk 6 eingespeist wird, wenn der Bedarf die von den Primärkraftwerken bereit gestellte Leistung übersteigt. Die eingezeichneten Stromleitungen 4 und 12 stehen stellvertretend für die Anbindung an das allgemeine Stromversorgungsnetz mit seiner Einbindung von Stromquellen und Stromsenken.

Das Pumpspeicherkraftwerk 6 ist im gezeigten Beispiel über ein Tau 52 mit einer Schwimmboje 54 verbunden, so dass das Pumpspeicherkraftwerk 6 bereits auf der Wasseroberfläche einfach aufgespürt und ggf. mit dem Tau 52 an die Oberfläche geholt werden kann.

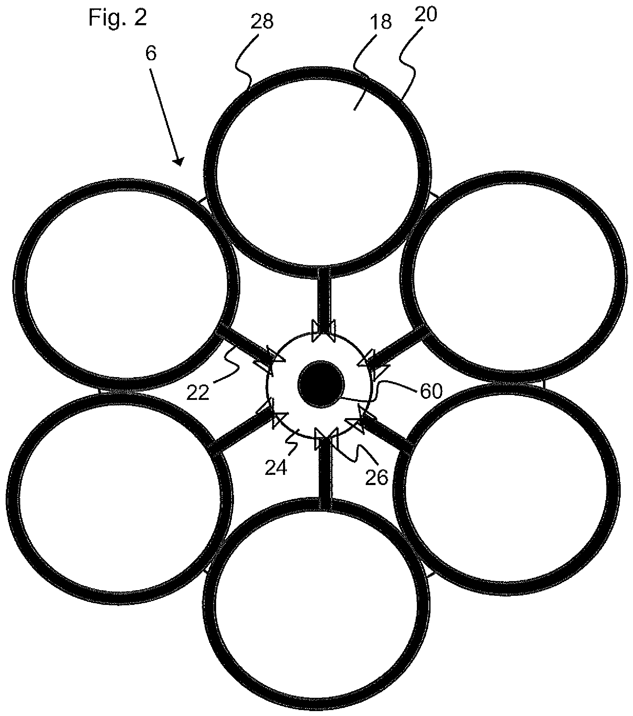

Bezug nehmend auf Fig. 2 sind in einer Aufsicht mehrere Druckbehälter 20 über Druckbehälterverbindungen 22, welche in der gezeigten Ausführungsform sowohl Zu- als auch Abfluss des jeweiligen Druckbehälters 20 bilden, mit dem mittig angeordneten Sumpf 24 verbunden und bilden gemeinsam das Druckspeichersystem 30. Die Druckbehälterverbindungen 22 können mit jeweils einem Absperrventil 26 geschlossen werden, so dass einzelne Druckbehälter 20, beispielsweise für Wartungszwecke, abgetrennt und an die Oberfläche geholt werden können. Der Sumpf 24 ist direkt an der Pumpturbineneinheit 60 angeordnet. Im Speicherbetrieb wird mittels einer in der Pumpturbineneinheit 60 angeordneten Pumpe 16 (nicht dargestellt) Wasser aus den inneren Kavitäten 18 der Druckbehälter 20 in das umgebende Meer 1 gepumpt. Die Pumpe 16 saugt das Wasser aus dem Pumpensumpf 24 an und pumpt das Wasser durch einen Wasserauslass 35 (nicht dargestellt) direkt in das umgebende Meer 1. Die inneren Kavitäten 18 der künstlichen Druckbehälter 20, im gezeigten Beispiel sechs innere Kavitäten 18 von sechs Druckbehältern 20, bilden demnach gemeinsam eines der beiden Wasserreservoire des Pumpspeicherkraftwerks (und zwar dasjenige mit der niedrigeren potentiellen Energie). Dadurch, dass die Pumpe 16 das Wasser gegen den in der Wassertiefe T herrschenden hydrostatischen Druck PT pumpen muss, wird eine große Menge an elektrischer Energie verbraucht und in potentielle Energie umgewandelt, wie durch die folgenden Beispiele verdeutlicht wird. Der Druckbehälter 20 speichert eine Energiemenge E in Kilowattstunden als Funktion des Volumens V des speicherbaren Wassers in Kubikmetern und der Wassertiefe T in Metern und bei einer Dichte des Wassers von 1000 kg/m$^3$:

$$E\ (kWh)\ =\ V\ (m^3)\ x\ T\ (m)\ x\ 9,81/3600$$

In einem Beispiel mit einem Volumen V = 10.000 m$^3$, einer Wassertiefe T = 2000 m und einem Druckbehälter 20 in Kugelform und einem Kavitätsdurchmesser von 28 m kann elektrische Energie E von etwa E = 58.000 kWh = 58 MWh gespeichert werden. Das bedeutet, dass eine Leistung von etwa 10 Megawatt über einen Zeitraum von 6 Stunden abgegeben werden kann. Bei einem täglichen Zyklus des Wiederaufladens des Pumpspeichers durch Wind- oder Photovoltaikstrom, d.h. tägliches Befüllen und Auspumpen des Speichervolumens V ergibt sich pro Jahr eine gespeicherte Energiemenge von etwa 20.000 MWh.

Es erscheint allerdings möglich, sogar noch größere Druckbehälter 20 zu bauen. Bei einem kugelförmigen Druckbehälter 20 mit einem Durchmesser von 280 m ergibt sich etwa ein Volumen V = 10.000.000 m$^3$. Bei einer wiederum angenommenen Versenktiefe T = 2.000 m kann etwa eine Energiemenge E = 58.000 MWh gespeichert werden. Dies entspricht einer Leitung von etwa 5 Gigawatt über eine Zeitdauer von etwa 12 Stunden. D.h. mit einer solchen Druck-Speicherkugel 20 könnte die Energiemenge, die etwa 1000 Windkraftanlagen 2 einer Leistung von jeweils 6 Megawatt über einen Zeitraum von fast 10 Stunden erzeugen, gespeichert werden. Bei einem täglichen Zyklus des Wiederaufladens des Speichers durch Windenergie, d.h. tägliches Befüllen und Auspumpen des Speichervolumens ergibt sich pro Jahr eine gespeicherte Energiemenge von etwa 20.000 GWh.

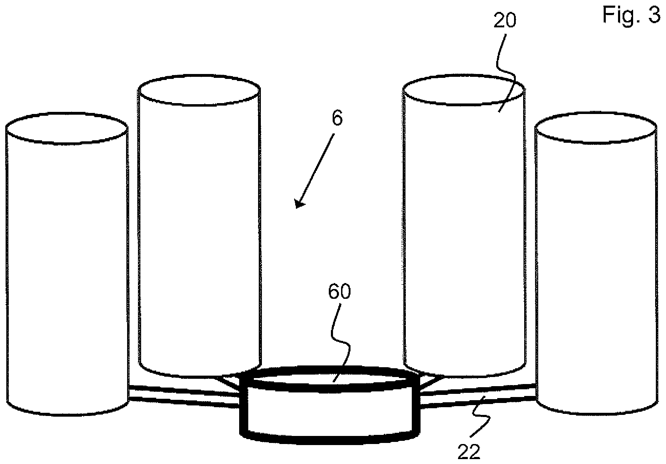

Fig. 3 zeigt die Ausführungsform der Fig. 2 in einer Seitenansicht, wobei die zylindrische Form der Druckbehälter 20 sowie die zentrale Anordnung des Pumpturbinenelements 60 weiter verdeutlicht wird. Die Druckbehälter 20 sind in der gezeigten Ausführung mittels Druckbehälterverbindungen 22 an das zentrale Pumpturbinenelement 60 angeschlossen.

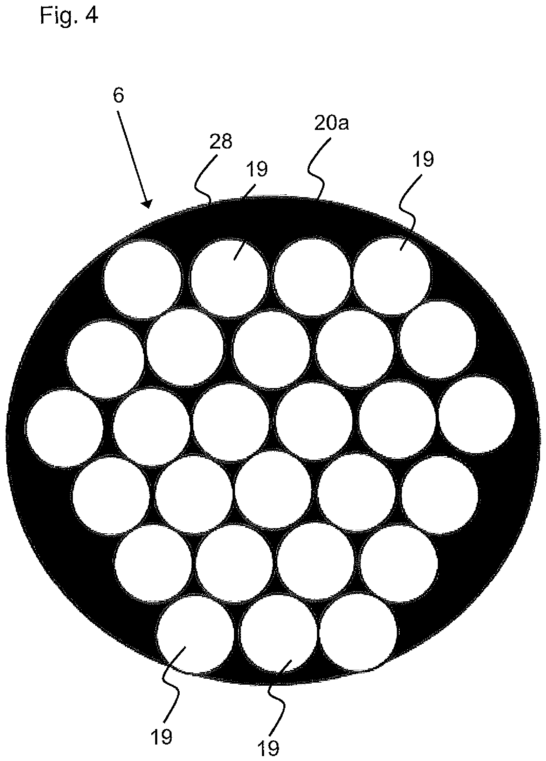

Fig. 4 zeigt eine alternative Ausführungsform des Druckspeichersystems mit einem integrierten Druckspeicherkomplex 20a. Eine Vielzahl innerer Druckbehälterelemente 19 bilden ein gemeinsames Druckspeichervolumen 20a und sind an einem Ende des integrierten Druckspeicherkomplexes 20a miteinander verbunden. Bei einer stehenden Aufstellung ist dieses Ende die Unterseite des integrierten Druckspeicherkomplexes, welche somit bereits den Sumpf 24 des Druckspeicherkomplexes bildet, an welchem das Wasser der Druckbehälterelemente 19 zusammenfließen kann. Die Druckbehälterelemente 19 werden aus Rohren gebildet, beispielsweise Stahlrohre oder Faserbetonrohre, die stehend nebeneinander angeordnet sind. Die Umwandung 28 wird dann so um die Rohre vergossen, dass die Hohlräume und der nach außen zum Meerwasser 1 gerichtete Bereich verfüllt sind. Die Materialstärke der Rohre wird entweder derart gewählt, dass diese ausreicht, den Druck der außen anliegenden Wassersäule auszuhalten, so dass die Umwandung 28 zu Zwecken der Statik die Rohre gegen Umfallen sichert und zusätzlich das Bauwerk zur Versenkung auf den Meeresgrund 8 beschwert. Andernfalls kann die Materialstärke der Druckbehälterelemente 19 auch dünner gewählt sein, so dass die Umwandung 28 des integrierten Druckspeicherkomplexes 20a zugleich auch den Druck der außen anliegenden Wassersäule aushält.

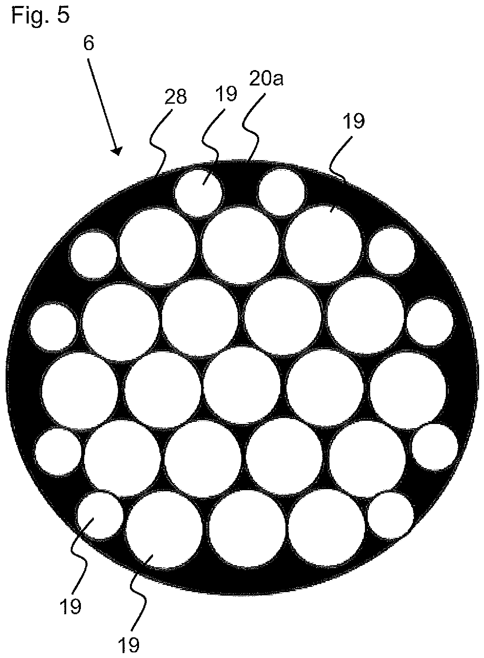

Fig. 5 zeigt eine zur Fig. 4 ähnliche Ausführungsform des Druckbehälters 20 als integrierten Druckspeicherkomplex 20a, wobei das von der Umwandung 28 umschlossene Volumen durch die Auswahl verschiedener geeigneter Rohrdurchmesser der einzelnen inneren Druckbehälterelemente 19 optimal ausgenutzt ist. Ggf. sind die im Außenbereich des integrierten Druckspeicherkomplexes 20a gezeigten kleineren Hohlräume auch dazu geeignet, mit einem Ballast beschwert bzw. gefüllt zu werden.

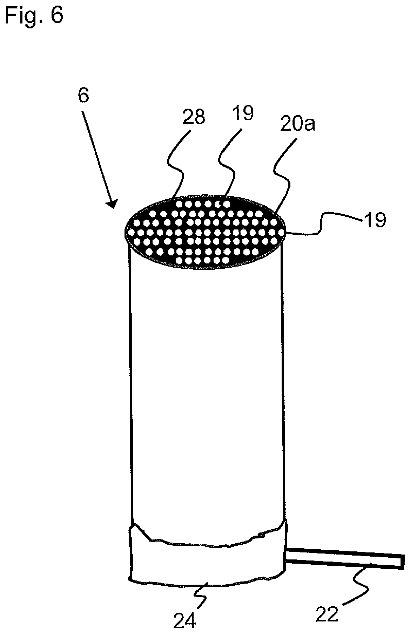

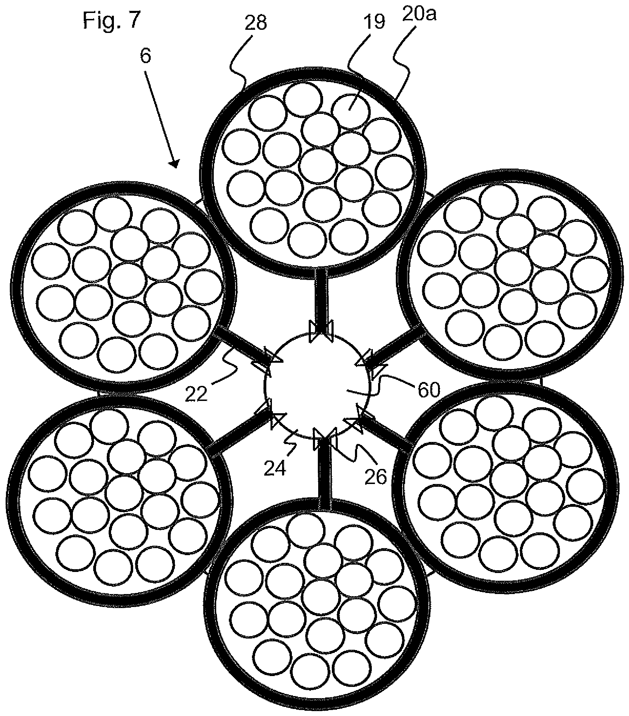

Fig. 6 zeigt eine Seitenansicht eines integrierten Druckspeicherkomplexes 20a mit einer Vielzahl von Druckbehälterelementen 19 und einer die Druckbehälterelemente 19 umschließenden Umwandung 28. Der integrierte Druckspeicherkomplex 20a weist an der Unterseite einen Sumpf 24 des Druckspeicherkomplexes auf und ist über eine Druckbehälterverbindung 22 mit einer zentralen Pumpturbineneinheit 60 (siehe Fig. 7) hydraulisch verbunden. Die Druckbehälterverbindung 22 ist somit auch Wassereinlass und Wasserauslass des integrierten Druckspeicherkomplexes 20a und kann auch mit weiteren Druckbehältern 20 (nicht gezeigt) verbunden sein. In dieser Ausführungsform weist der integrierte Druckspeicherkomplex 20a keine mechanisch bewegten Teile oder Komponenten der Leistungselektronik zur Stromerzeugung oder Stromvernichtung auf.

Fig. 7 zeigt eine schematische Aufsicht eines Unterwasser-Pumpspeicherkraftwerks 6 mit einer zentralen Pumpturbineneinheit 60 und damit über Druckbehälterverbindungen 22 verbundene integrale Druckspeicherkomplexe 20a mit jeweils einer Vielzahl an Druckbehälterelementen 19. Die integralen Druckspeicherkomplexe 20a weisen in dieser Ausführungsform keine beweglichen Teile auf, da sowohl die Pumpe 16 als auch die Turbine 36 und Absperrventile 26 an oder in der Pumpturbineneinheit 60 integriert sind. Die Absperrventile 26 können im Fehlerfalle oder bei Wartungsbedarf die integralen Druckspeicherkomplexe 20a von der zentralen Pumpturbineneinheit 60 trennen. Die Pumpturbineneinheit 60 bildet an der Pumpe 16 auch den hydrostatisch niedrigsten Punkt, den Sumpf 24, zu dem der Schwerkraft folgend das Wasser selbständig fließt.

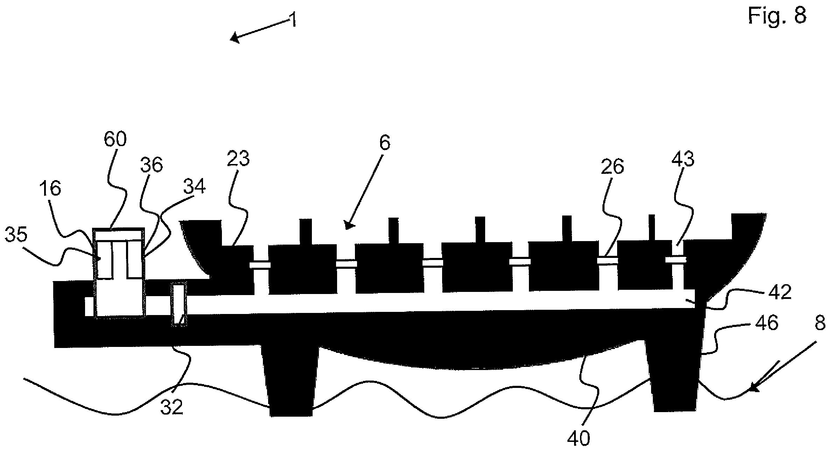

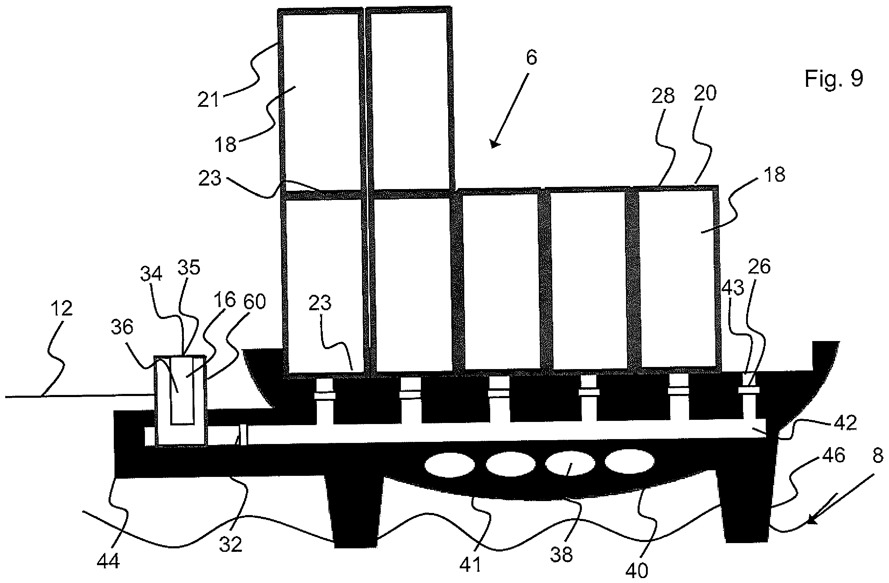

Fig. 8 zeigt eine weitere Ausführungsform des modularen Pumpspeicherkraftwerks 6, wobei ein Bodenkörper 40 die Basis zur Aufnahme von weiteren Komponenten des Pumpspeicherkraftwerks 6 und zu dessen Befestigung oder Verankerung am Meeresgrund 8 bildet. Der Bodenkörper 40 weist in seinem Inneren Seitenkanäle 43 zur Verbindung der Druckspeicher 20 (siehe Figur 9) mit einem Hauptkanal 42 auf, welcher wiederum in der gezeigten Ausführungsform sowohl mit der Turbine 16 als auch mit der Pumpe 36 verbunden ist. Somit bildet der Hauptkanal 42 sowohl den Zulauf von der Turbine 16 zu den Druckspeichern 20 als auch den Ablauf von den Druckspeichern 20 zu der Pumpe 16, so dass nur ein Kanal und damit ggf. auch nur eine Öffnung in der Umwandung jedes einzelnen Druckbehälters benötigt ist. Vorteilhaft ist in jedem Seitenkanal 43 ein Absperrventil 26 eingebaut, so dass die jeweils an den Anschlusskupplungen 23 der Seitenkanäle 43 montierten Druckbehälter 20 abgesperrt und beispielsweise für Wartungszwecke vom Bodenkörper 40 getrennt werden können. Auch ermöglichen die Absperrventile 26 in den Seitenkanälen 43 des Bodenkörpers 40, ein universelles Bodenstück zu verwenden, bei welchem, falls nur ein geringeres Druckspeichervolumen benötigt wird, einzelne Anschlusskupplungen 23 ungenutzt bleiben, so dass die Bodenkörper in Großserie hergestellt und dennoch an den jeweiligen Einsatzbereich angepasst werden können.

Der Bodenkörper 40 weist an seiner Unterseite Füße 46 auf, die zur Fixierung des Bodenkörpers 40 auf dem Meeresboden 8 aufstehen oder in dem Meeresboden 8 versenkt sind, wenn der Bodenkörper 40 auf dem Meeresboden 8 aufliegt.

Fig. 9 zeigt eine Ausführungsform des Pumpspeicherkraftwerks 6 mit Bodenkörper 40, Pumpturbineneinheit 60 und einer Vielzahl von an Anschlusskupplungen 23 des Bodenkörpers 40 montierten Druckbehältern 20, welche ein gemeinsames, modulares Druckspeichervolumen bilden und von der gemeinsamen Pumpturbineneinheit 60 für Befüllung und Entnahme versorgt werden. Je nach Anforderungen und beispielsweise dem Wirkungsgrad von auszuwählenden Komponenten der Pumpe 16 und Turbine 36 können auch mehrere Pumpturbineneinheiten 60 auf einem Bodenkörper 40 montiert werden, um die Effizienz und die Leistungsabgabe zu erhöhen.

Zum Wiedergewinnen der in den leergepumpten Druckbehältern 20 des Pumpspeicherkraftwerks 6 gespeicherten Energie sind ein Zu-/Ablaufventil 32 sowie die Absperrventile 26 der Seitenkanäle 43 geöffnet und das Wasser strömt durch einen Wassereinlass 34 aus dem umgebenden Meer mit dem der Wassertiefe T entsprechenden hydrostatischen Druck PT durch die Turbine 36 in die inneren Kavitäten 18 der Druckbehälter 20 und somit in das gemeinsame Pumpspeichervolumen, wobei die beim Auspumpen gespeicherte Energie abzüglich der üblichen Leistungsverluste wieder gewonnen werden kann. Die wieder gewonnene elektrische Energie wird durch die Stromleitung 12 in das allgemeine Stromversorgungsnetz eingespeist. Um die Leistung zu erhöhen, können mehrere Wassereinlässe 34 mit Ventilen 32 und Turbinen 36 vorhanden sein. Um Schwingungen der Druckbehälter aufgrund des großen Wasserflusses zu vermeiden, können die inneren Kavitäten 18 mit Streben bzw. einem Tragwerk durchsetzt sein (nicht dargestellt). Die Querstreben können dabei eine Doppelfunktion erfüllen, nämlich einerseits den Druckbehälter 20 zu stabilisieren und andererseits Turbulenzen in dem durch den Generator 36 in die innere Kavität 18 einströmenden Wasser zu erzeugen, um Resonanzschwingungen im Druckbehälter 20 zu verhindern.

Der Druckbehälter 20 besteht aus einer rohrförmigen Betonwandung 28 mit einer Anschlusskupplung 23 an der Unterseite und ggf. einer weiteren Anschlusskupplung 23 an der Oberseite, so dass die Druckbehälter 20 mit dem Bodenkörper 40 und weitere Druckbehälter 21 an den Druckbehältern 20 gekoppelt werden können. Die Wandstärke der Druckbehälter 20 und des Bodenkörpers 40 wird in Abhängigkeit der Wassertiefe T gewählt, in welche das Pumpspeicherkraftwerk 6 versenkt wird und in Abhängigkeit der notwendigen Masse, damit es noch versenkt werden kann. Die Turbinen 36 und die Pumpen 16 sind unmittelbar an dem Bodenkörper 40 angeordnet, z.B. unmittelbar an dem Hauptkanal 42 oder auf einem Ausleger 44 des Bodenkörpers 40. In der gezeigten Ausführungsform sind Pumpe 16, Turbine 36 sowie Wasserein- und Auslassöffnung 34, 26 in einer Pumpturbineneinheit 60 integriert angeordnet. Zum Speichern und Wiedergewinnen der elektrischen Energie wird das Wasser lediglich über eine kurze Distanz, nämlich lediglich durch die Ein- bzw. Auslassöffnung 34, 26 geleitet. Das Pumpspeicherkraftwerk 6 benötigt demnach lediglich elektrische Leitungen 4, 12 von der Meeresoberfläche auf den Meeresgrund 8, nicht jedoch Rohre oder Leitungen zum Transport von Wasser. Ggf. kann sogar eine elektrische Leitung als Stromzuleitung und -ableitung genügen. Weiter vorteilhaft ist, dass die Druckdifferenz aufgrund der großen Wassertiefe nicht stark vom Füllstand innerhalb des Druckbehälters 20 abhängig ist, so dass die bereit stehende Leistung unabhängig vom Füllstand im Wesentlichen konstant ist.

Der Bodenkörper 40 weist in seiner Wandung 28 Hohlräume 38 auf, welche mit Schüttgut, z.B. Sand gefüllt sind, um die Masse des Pumpspeicherkraftwerks 6 auszutarieren. Das Pumpspeicherkraftwerk 6, bzw. dessen Komponenten Bodenkörper 40 und Druckbehälter 20, wird vorzugsweise zunächst so austariert, dass es gerade noch schwimmt, wenn es vollständig leergepumpt ist, so kann es mit einem Schiff an die Stelle transportiert werden, an der es versenkt werden soll. Anschließend wird an der Versenkstelle des Bodenkörpers 40 und/oder der Druckbehälter 20 mit Ballastwasser soweit beschwert, dass das Pumpspeicherkraftwerk 6 versinkt. Es kann beispielsweise zunächst der Bodenkörper 40 versenkt werden und die Druckbehälter 20 werden am Meeresboden 8 an den Bodenkörper 40 montiert oder die Druckbehälter 20 werden bereits an der Wasseroberfläche an den Anschlusskupplungen 23 des Bodenkörpers 40 angebracht und anschließend das gesamte Pumpspeicherkraftwerk 6 versenkt. Die als Ballastwasser verwendete Wassermenge dient lediglich der Beschwerung und wird im Normalbetrieb, d.h. beim Speichern und Wiedergewinnen der elektrischen Energie, nicht herausgepumpt, damit das Pumpspeicherkraftwerk 6 im Normalbetrieb immer eine größere Masse als das verdrängte Wasser besitzt und somit auf dem Meeresgrund 8 liegen bleibt. Das Ballastwasser kann aber auch in die separaten Hohlräume 38 gefüllt werden. Z.B. für Wartungsarbeiten kann das zusätzliche, im Normalbetrieb nicht zum Energiespeichern vorgesehene Ballastwasser aber herausgepumpt werden, so dass das Pumpspeicherkraftwerk 6 wieder auftaucht oder zumindest so leicht wird, dass es z.B. mit dem Seil 52, welches an der Meeresoberfläche mit einer Schwimmboje 54 markiert ist (siehe Figur 1), aufgeholt werden kann.

Wegen des immens großen Gewichtes des Bodenkörpers 40 sowie der Druckbehälter 20 bietet es sich an, diese schwimmend im Wasser zu bauen, z.B. in schwimmendem Zustand abschnittsweise sukzessive aus Stahlbeton zu gießen. Dabei sollte der unfertige Druckbehälter während der Herstellung soweit aus dem Wasser ragen, dass auch bei einem Sturm ein Volllaufen seines Innenhohlraums 18 nicht möglich ist. Die Dicke der Wandung 28 des Druckbehälters 20 muss einmal den extrem großen hydrostatischen Wasserdruck aushalten und zudem dem Druckbehälter 20 ein so hohes Eigengewicht geben, dass das Pumpspeicherkraftwerk 6 mit zumindest nahezu leerem Innenhohlraum 18 auf den Meeresboden 8 absinkt. Als Wandmaterial kommt z.B. Stahlbeton in Frage. Die Statik wird so ausgeführt, dass der Druckbehälter 20 ohne Beschädigung höhere Drücke aushalten kann, als auf dem Meeresgrund 8 vorhanden sind. In den Bodenkörper 40 werden alle System-relevanten Komponenten wie Ventile 26, 32, Turbinen 36, Pumpen 16, Kanäle 42, 43 und/oder elektrische Leitungen usw. integriert, und die Druckbehälter 20 werden mit Anschlusskupplungen 23 versehen, so dass sie später ihre Funktion auf viele Jahrzehnte erfüllen können. Die Kontroll- und Steuerelektronik ist ebenfalls unmittelbar an dem Bodenkörper 40 angeordnet und wird mit versenkt.

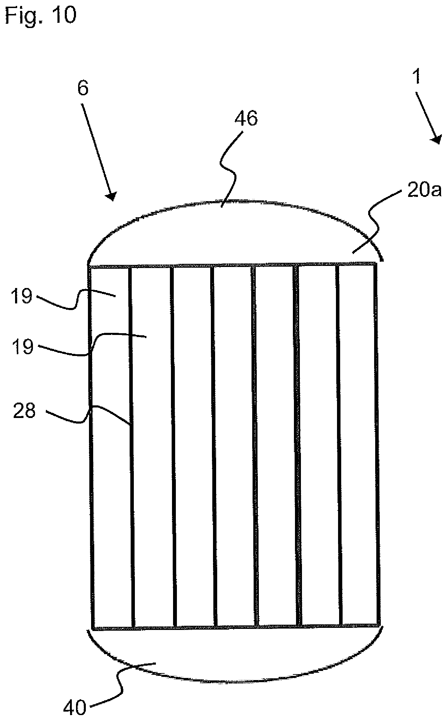

Fig. 10 zeigt eine Seitenansicht eines integrierten Druckspeicherkomplexes mit mehreren inneren Druckbehälterelemente 19, wie es mit Figuren 4 und 5 vorgestellt wurde. Die Druckbehälterelemente 19 sind über einen Bodenkörper 40 miteinander hydraulisch verbunden und bilden ein gemeinsames Druckspeichervolumen. Zum Abschluss und zum Abdichten des Druckspeicherkomplexes hin zum umgebenden Meerwasser 1 ist ein Deckel 46 an der Oberseite angebracht. Im Deckel oder im Bodenkörper 40 ist eine Pumpturbineneinheit 60 angeordnet, so dass nicht für jedes der Druckbehälterelemente 19 getrennt eine Pumpe und/oder eine Turbine einzusetzen ist, sondern sich in vorteilhafter Weise die Druckbehälterelemente 19 die gemeinsame Infrastruktur an Pumpe(n) 16, Turbine(n) 36 und der elektrischen Stromversorgung teilen. Der integrierte Druckspeicherkomplex mit einer Vielzahl an Druckbehälterelementen 19 ist somit ein eigenständiges Unterwasser-Pumpspeicherkraftwerk 6.

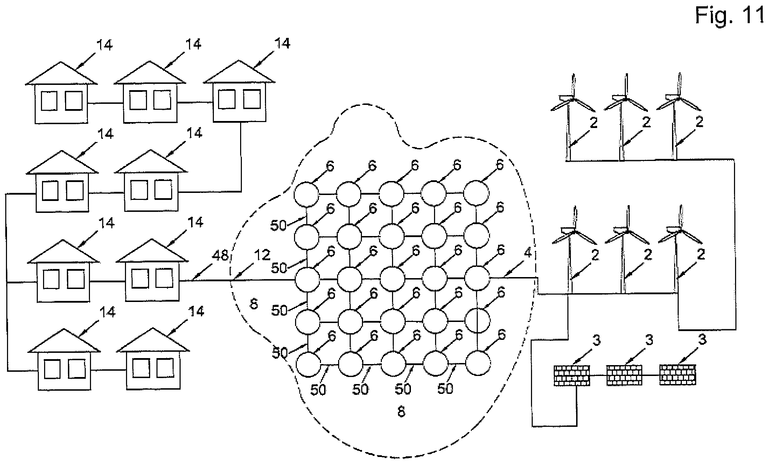

Bezug nehmend auf Fig. 11 ist ein Stromversorgungsnetz 48 mit einer Mehrzahl von miteinander vernetzten Verbrauchern 14 und einer Mehrzahl von miteinander vernetzten Windkraftanlangen 2 sowie Photovoltaikanlagen 3 dargestellt, welche die Primärkraftwerke bilden. Die von den Primärkraftwerken 2, 3 erzeugte elektrische Primärenergie wird mittels einer Vielzahl von Pumpspeicherkraftwerken 6 gemäß Fig. 2 bis 4 zwischengespeichert. Die vielen Pumpspeicherkraftwerke 6 sind auf dem Meeresgrund 8 lediglich mittels elektrischer Unterwasser-Leitungen 50 vernetzt und liefern bei Bedarf die zurückgewonnene elektrische Energie über den vorhandenen Teil des Stromversorgungsnetzes 48 an die Verbraucher 14.

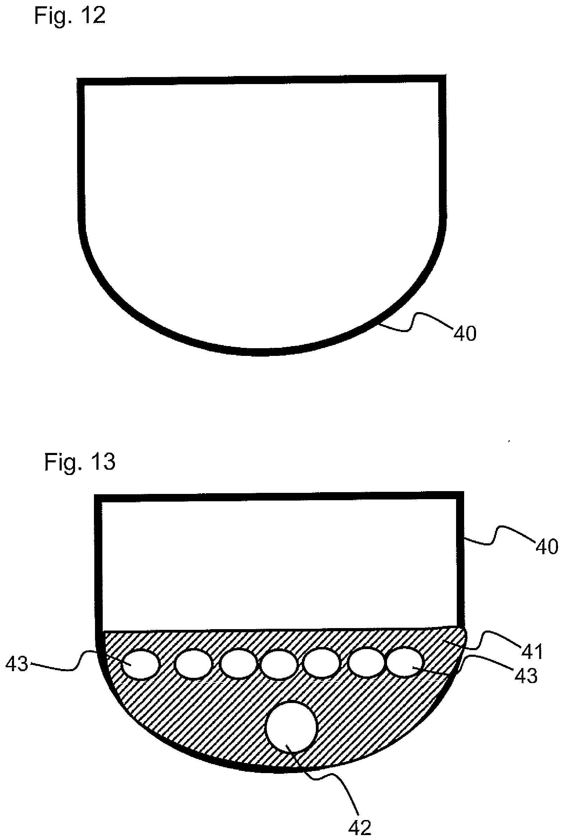

Mit den Figuren 12 bis 14 wird ein bevorzugter Fertigungsvorgang vorgestellt, bei welchem mit Bezug auf Fig. 12 zunächst eine Rohform des Bodenkörpers 40 in einem Dock oder Hafen hergetellt wird. Es wird so hergestellt, dass es immer gerade schwimmt und dann zum Versenken irrgendwo im Meer dahin geschleppt wird un mit etwas Ballast auf den Meeresboden versenkt wird. Das Dock im Hafen ist ggf. als Schalung des Bodenkörpers 40 verwendbar. Mit Bezug auf Fig. 13 sind in dem Bodenkörper 40 bereits Verbindungsrohre zur Turbine und zur Pumpe verlegt, die die Funktion des bisher beschriebenen Hauptkanals 42 sowie der Seitenkanäle 43 integral in dem Bodenkörper 40 übernehmen. Ferner ist ein Bodengewicht bzw. eine Füllmasse 41 in den Bodenkörper 40 eingefüllt, also beispielsweise eine Betonmasse eingegossen. Die Füllmasse kann in einfacher Weise die Haupt- und Seitenkanäle 42, 43 umhüllen.

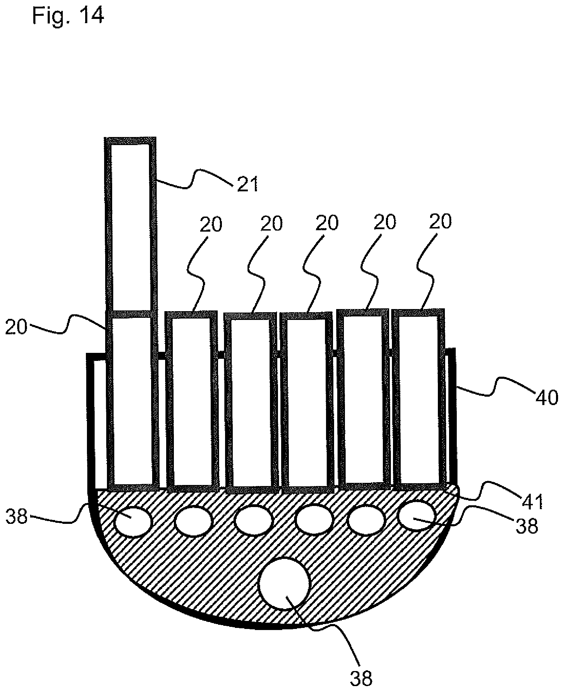

Mit Bezug auf Fig. 14 kann sich der Bodenkörper 40 noch immer in dem zur Herstellung herangezogenen Hafen oder Dock, oder aber bereits auf hoher See befinden. Es sind Druckbehälte 20 und ein weiterer Druckbehälter 21 dargestellt, die auf die Füllmasse 41 aufgesetzt sind. Im einfachsten Fall werden die Druckbehälter 20, 21 im Hafen per Containerkran auf den Bodenkörper 40 aufgesetzt und verankert.

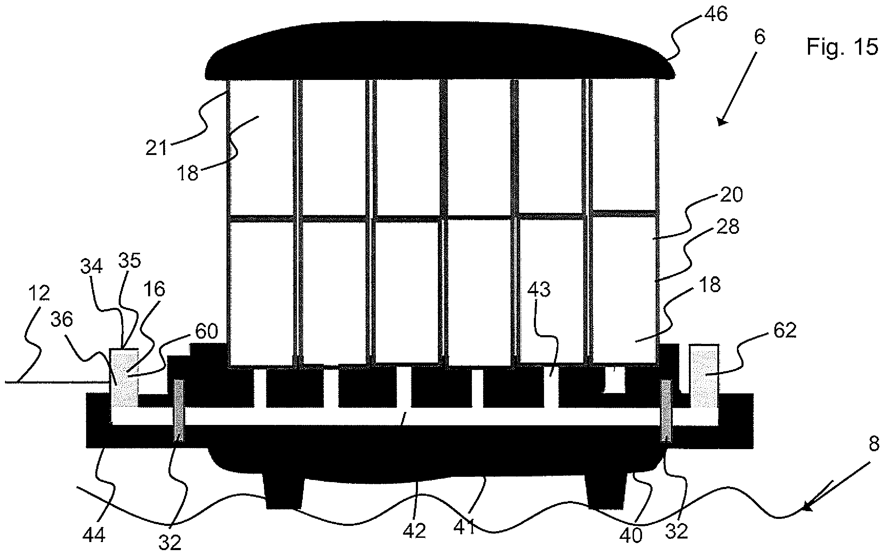

Fig. 15 zeigt eine weitere Ausführungsform des Unterwasser-Pumpspeicherkraftwerks. Es unterscheidet sich von der mit Fig. 9 gezeigten Ausführungsform zunächst dadurch, dass ein zweiter Pumpturbinenblock 62 am Bodenkörper

EP 2 776 705 B1

40 angeordnet ist, der beispielsweise im Parallelbetrieb die Stromproduktion erhöhen kann und/oder die Ausfallsicherheit erhöht. Zur separaten Ansteuerung des Pumpturbinenblocks 60 bzw. des zweiten Pumpturbinenblocks 62 umfasst der Bodenkörper in dieser Ausführungsform zwei zu-/Ablaufventile, die sich vor dem jeweiligen Pumpturbinenblock 60, 62 befinden. Ferner sind die Druckbehälter 20 als einfache Röhren ausgeführt, die miteinander verbunden sind und am oberen Ende einen gemeinsamen Deckel 46 aufweisen, der beispielsweise ebenfalls einfach aus Beton gegossen ist.

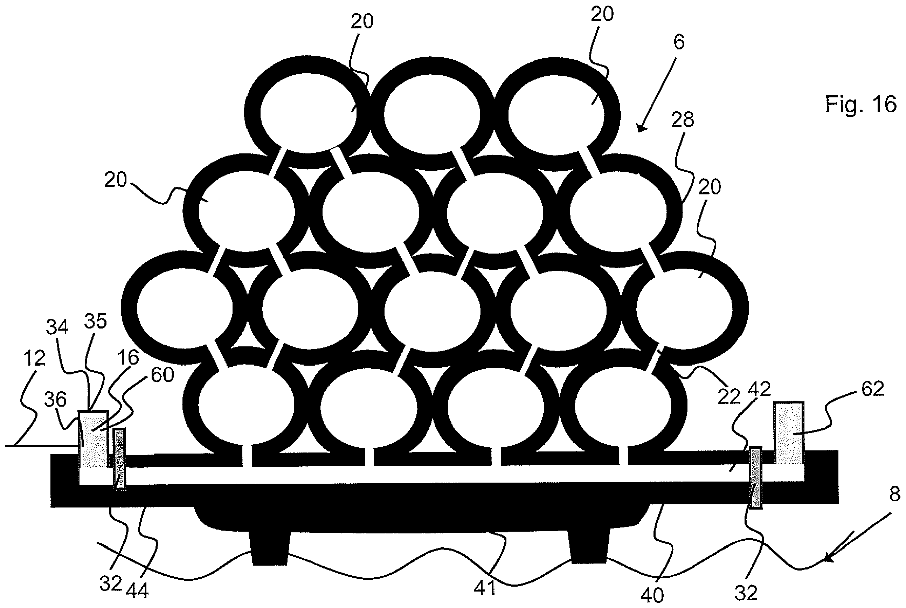

In der in Fig. 16 gezeigten Ausführungsform sind die Druckbehälter 20 als kugelförmige Druckbehälter 20 ausgeführt und weisen einfache Druckbehälterverbindungen 22 auf. Beispielsweise sind die Druckbehälter einfach miteinander verschraubt.

Es ist dem Fachmann ersichtlich, dass die vorstehend beschriebenen Ausführungsformen beispielhaft zu verstehen sind, und die Erfindung nicht auf: diese beschränkt ist, sondern in vielfältiger Weise variiert werden kann, ohne die Erfindung zu verlassen.

Bezugszeichenliste:

| | |
|---|---|
| 1 | Umgebendes Meer |
| 2 | Windkraftwerk |
| 3 | Photovoltaikanlage |
| 4 | Stromleitung |
| 6 | Pumpspeicherkraftwerk |
| 8 | Meeresgrund |
| 12 | Stromleitung |
| 14 | Verbraucher |
| 16 | Pumpe |
| 18 | Innere Kavität |
| 19 | Inneres Druckbehälterelement |
| 20 | Druckbehälter |
| 20a | Integrierter Druckspeicherkomplex |
| 21 | Weiterer Druckbehälter |
| 22 | Druckbehälterverbindung |
| 23 | Anschlusskupplung |
| 24 | Sumpf |
| 26 | Absperrventil |
| 28 | Umwandung |
| 30 | Druckspeichersystem |
| 32 | Zu-/Ablaufventil |
| 34 | Wassereinlass |
| 35 | Wasserauslass |
| 36 | Turbine |
| 38 | Hohlraum |
| 40 | Bodenkörper |
| 41 | Füllmasse |
| 42 | Hauptkanal |
| 43 | Seitenkanal |
| 44 | Ausleger |
| 46 | Deckel |
| 48 | Stromversorgungsnetz |
| 50 | elektrische Unterwasserleitungen |
| 52 | Tau |
| 54 | Schwimmboje |
| 60 | Pumpturbineneinheit |
| 62 | Zweite Pumpturbineneinheit |

**Patentansprüche**

**1.** Unterwasser-Pumpspeicherkraftwerk (6) zum temporären reversiblen Zwischenspeichern von elektrischer Energie aus anderen Kraftwerken, insbesondere Windkraftanlagen (2) und/oder Photovoltaikanlagen (3), umfassend

ein modular aufgebautes Druckspeichersystem mit zumindest zwei mit Wasser befüllbaren Druckbehältern (20), welche ein gemeinsames Druckspeichervolumen bilden, einen Wasserauslass (35) zum Ausströmenlassen von Wasser aus dem Druckspeichersystem unmittelbar in das umgebende Meer (1) gegen den der Wassertiefe (T) entsprechenden hydrostatischen Wasserdruck (PT), eine an dem Wasserauslass (35) angeordnete Pumpe (16) zum Herauspumpen von Wasser aus dem Druckspeichersystem in das umgebende Meer, wobei die Pumpe (16) beim Herauspumpen des Wassers gegen den hydrostatischen Wasserdruck (PT) des umgebenden Meeres (1) elektrische Energie in entsprechende potentielle Energie der verdrängten Wassersäule umwandelt, einen Wassereinlass (34) zum Einströmenlassen von Wasser unmittelbar aus dem umgebenden Meer (1) mit dem der Wassertiefe entsprechenden hydrostatischen Wasserdruck (PT) in das Druckspeichersystem, einen an dem Wassereinlass (34) angeordneten gemeinsamen Generator (36), wobei der gemeinsame Generator (36) beim Einströmen des Wassers mit dem hydrostatischen Wasserdruck (PT) in der Wassertiefe (T) die potentielle Energie der vorher verdrängten Wassersäule wieder in elektrische Energie umwandelt, einen Bodenkörper zur Aufnahme der Druckbehälter (20), der Pumpe (16) und des Generators (36), elektrische Leitungen (12) zum Transport der elektrischen Energie von der Meeresoberfläche zu dem Unterwasser-Pumpspeicherkraftwerk (6) und zurück, wobei die Druckbehälter (20) derart druckfest sind, dass diese formstabil gegen den hydrostatischen Wasserdruck (PT) am Meeresgrund (8) mittels der Pumpe (16) leergepumpt werden können, wobei die Druckbehälter über einen Sumpf (24) miteinander verbunden sind, der den tiefsten oder zumindest einen der tiefsten Punkte des Druckspeichersystems bildet, wobei der Wasserauslass (35) an dem Sumpf angeordnet ist, und wobei die Druckbehälter (20) und/oder der Bodenkörper (40) im entleerten Zustand leichter als Wasser sind und somit auf der Meeresoberfläche schwimmen, so dass diese Komponenten schwimmend zum Montageort gebracht und dort versenkt werden können.

2. Unterwasser-Pumpspeicherkraftwerk nach vorstehendem Anspruch,

wobei die Verbindung der Druckbehälter (20) mit dem Sumpf (24) zumindest ein Absperrventil (26) zum Trennen zumindest eines der Druckbehälter (20) vom Druckspeichersystem aufweist.

3. Unterwasser-Pumpspeicherkraftwerk nach einem der vorstehenden Ansprüche, ferner umfassend zumindest eine von dem Druckspeichersystem abkoppelbare Pumpturbineneinheit (60), die zumindest den Wassereinlass (34), den Wasserauslass (35), die gemeinsame Pumpe (16) und den Generator (36) sowie die Elektroinstallation beherbergt, so dass die Pumpturbineneinheit (60) einzeln zu Wartungszwecken an die Meeresoberfläche gebracht werden kann.

4. Unterwasser-Pumpspeicherkraftwerk nach einem der vorstehenden Ansprüche, wobei die Pumpe (16) eine gemeinsame Pumpe ist, wobei die gemeinsame Pumpe und der gemeinsame Generator (36) eine umkehrbare Pumpturbine bilden und wobei die Pumpturbine an einem kombinierten Wassereinlass und Wasserauslass (34, 35) angeordnet ist.

5. Unterwasser-Pumpspeicherkraftwerk nach einem der vorstehenden Ansprüche, wobei das gemeinsame Druckspeichervolumen eine Mehrzahl von aneinandergereihten und miteinander verbundenen zylinderförmigen Druckbehältern (20) umfasst und/oder wobei die Druckbehälter (20) Rohrstücke sind und wobei die Wandstärke der Rohrstücke ausreichend groß ist, dass die Rohrstücke dem Wasserdruck am Meeresgrund (8) standhalten.

6. Unterwasser-Pumpspeicherkraftwerk nach einem der vorstehenden Ansprüche, wobei die Druckbehälter (20) innere Druckbehälterelemente (19) sind und wobei aus jeweils eng benachbarten Druckbehälterelementen (19) in Form von Rohren ein integrierter Druckspeicherkomplex (20a) gebildet wird und die zwischen den Rohren gebildeten Hohlräume zur Stabilisierung des integrierten Druckspeicherkomplexes und zur Beschwerung des Druckspeichersystems mit einer Füllmasse verfüllt werden.

7. Unterwasser-Pumpspeicherkraftwerk nach einem der vorstehenden Ansprüche, wobei der Dodenkörper (40) die aufgenommenen Druckbehälter (20) mit der Pumpe (16) durch einen integralen Hauptkanal (42) im Inneren des Bodenkörpers (40) verbindet, so dass die Druckbehälter (20) über den Bodenkörper (40) miteinander verbunden sind und die Druckbehälter (20) ein über den Bodenkörper verbundenes gemeinsames Druckspeichervolumen bilden.

8. Unterwasser-Pumpspeicherkraftwerk nach vorstehendem Anspruch, wobei der Bodenkörper (40) Füße (46) zur stabilen und sicheren Auflage des Bodenkörpers auf dem Meeresboden aufweist (8) und/oder wobei die Druckbehälter (20) und/oder der Bodenkörper (40) selbstdichtende Anschlusskupplungen (23) zum lösbaren Verbinden der Druckbehälter (20) mit dem Bodenkörper (40) und/oder unmittelbar mit weiteren Druckbehältern (21) aufweist.

9. Unterwasser-Pumpspeicherkraftwerk nach einem der Ansprüche 3 bis 8, wobei der Bodenkörper (40) oder die abkoppelbare Pumpturbineneinheit (60) redundante Pumpen und Ventile und/oder eine Reinigungseinrichtung zur automatischen Reinigung der Wassereinlässe und Wasserauslässe (34, 35) umfasst.

10. Unterwasser-Pumpspeicherkraftwerk nach einem der vorstehenden Ansprüche, wobei die Druckbehälter (20) und/oder der Bodenkörper (40) Hohlräume (38) zum Befüllen mit Beschwerungsmaterial aufweisen und/oder wobei die Druckbehälter (20) und/oder der Bodenkörper (40) zur weiteren Aussteifung ein inneres Tragwerk aufweisen.

11. Stromversorgungsnetz umfassend:

eine Vielzahl von Primärenergiekraftwerken, welche zeitlich schwankend elektrische Energie erzeugen, insbesondere Windkraftanlagen (2) und/oder Photovoltaikanlagen (3), zumindest ein Unterwasser-Pumpspeicherkraftwerk (6) nach einem der vorstehenden Ansprüche, eine Vielzahl von Verbrauchern (14) elektrischer Energie, ein elektrisches Leitungsnetz (12, 50), welches die Verbraucher, das zumindest eine Unterwasser-Pumpspeicherkraftwerk und die Primärenergiekraftwerke miteinander verbindet, so dass die von den Primärenergiekraftwerken erzeugte elektrische Energie zu Zeiten eines Energieüberschusses aus den Primärenergiekraftwerken von dem zumindest einen Unterwasser-Pumpspeicherkraftwerk reversibel zwischengespeichert und zu Zeiten hohen Bedarfs an elektrischer Energie zurückgewonnen und die zurückgewonnene elektrische Energie zu den Verbrauchern geleitet werden kann.

12. Verfahren zum temporären reversiblen Zwischenspeichern von elektrischer Energie aus Primärenergiekraftwerken, insbesondere aus Windkraftanlagen (2) und/oder Photovoltaikanlagen (3), mit einem Unterwasser-Pumpspeicherkraftwerk (6) mit zumindest zwei künstlichen mit Wasser befüllbaren und auf den Meeresgrund versenkten Druckbehältern (20), die über einen Sumpf (24) miteinander verbunden sind, der den tiefsten oder zumindest einen der tiefsten Punkte des Druckspeichersystems bildet,
wobei die Druckbehälter (20) derart druckfest sind, dass sie formstabil gegen den hydrostatischen Wasserdruck (PT) am Meeresgrund (8) leergepumpt werden können,
wobei zum Speichern der elektrischen Energie Wasser aus dem Unterwasser-Pumpspeicherkraftwerk (6) mittels eines Wasserauslasses (35) unmittelbar in das umgebende Meer mit dem der Wassertiefe entsprechenden hydrostatischen Wasserdruck (PT) herausgepumpt wird, wobei elektrische Energie in die der Wassersäule in der Wassertiefe (T) entsprechende potentielle Energie umgewandelt wird,
wobei der Wasserauslass (35) an dem Sumpf (24) angeordnet ist, und
wobei zum Wiedergewinnen der elektrischen Energie Wasser unmittelbar aus dem umgebenden Meer mit dem der Wassertiefe (T) entsprechenden hydrostatischen Wasserdruck (PT) in das Unterwasser-Pumpspeicherkraftwerk (6) einströmt, die dem hydrostatischen Wasserdruck (PT) der Wassersäule in der Wassertiefe entsprechende potentielle Energie mittels eines Generators (36) in elektrische Energie umgewandelt wird, wobei die elektrische Energie mittels elektrischer Leitungen (12) von der Meeresoberfläche zum temporären reversiblen Zwischenspeichern zu dem Unterwasser-Pumpspeicherkraftwerk hinuntergeleitet und zum Verbrauchen von dem Unterwasser-Pumpspeicherkraftwerk wieder zur Meeresoberfläche zurückgeleitet wird, ferner mit einem Bodenkörper zur Aufnahme der Druckbehälter (20), der Pumpe (16) und des Generators (36),
wobei die Druckbehälter (20) und/oder der Bodenkörper (40) im entleerten Zustand leichter als Wasser sind und somit auf der Meeresoberfläche schwimmen können, so dass diese Komponenten schwimmend zum Montageort gebracht und dort versenkt werden können.

13. Verfahren nach vorstehendem Anspruch,
wobei das Unterwasser-Pumpspeicherkraftwerk (6) zunächst so austariert wird, dass seine Masse geringer ist, als die Masse des verdrängten Wassers, so dass das Unterwasser-Pumpspeicherkraftwerk (6) zunächst schwimmt und die Masse des Unterwasser-Pumpspeicherkraftwerk durch Einfüllen von Schüttgut und/oder Ballastwasser in den Bodenkörper (40) und/oder die Druckbehälter (20) am Versenkungsort so weit vergrößert wird, dass die Masse des Unterwasser-Pumpspeicherkraftwerk größer wird als die Masse des verdrängten Wassers und das Unterwasser-Pumpspeicherkraftwerk versinkt und am Meeresgrund (8) zu liegen kommt.

14. Verfahren zur Herstellung eines Unterwasser-Pumpspeicherkraftwerks nach einem der Ansprüche 1 bis 10 mit den Schritten:

Herstellen einer Rohform des Bodenkörpers (40) in einem Dock oder Hafen,
Einfüllen einer Füllmasse (41) in den Bodenkörper (40),
Aufsetzen von Druckbehältern (20) auf den Bodenkörper (40) in dem Dock oder Hafen,
wobei der Bodenkörper (40) so hergestellt wird, dass er immer gerade schwimmt, wobei die Masse des Unterwasser-Pumpspeicherkraftwerk durch Einfüllen von Schüttgut und/oder Ballastwasser in den Bodenkörper (40) und/oder die Druckbehälter (20) so weit vergrößert werden kann, dass die Masse des Unterwasser-Pumpspeicherkraftwerk größer wird als die Masse des verdrängten Wassers und das Unterwasser-Pumpspeicherkraftwerk versinkt und am Meeresgrund (8) zu liegen kommt.

**Claims**

1. Underwater pumped storage power plant (6) for temporary reversible storage of electrical energy from other power plants, such as wind power stations (2) and/or photovoltaic systems (3), comprising:

an accumulator system with a modular design, having at least two pressure vessels (20) that can be filled with water and that constitute a common accumulator volume,
a water outlet (35) to allow water to flow out of the accumulator system directly into the surrounding ocean (1) against the hydrostatic water pressure (PT) corresponding to the water depth (T),
a pump (16) located at the water outlet (35) to pump water out of the accumulator system into the surrounding ocean, wherein the pump (16) converts electrical energy into the potential energy corresponding to the displaced water column when pumping the water out against the hydrostatic water pressure (PT) of the surrounding ocean (1),
a water inlet (34) to allow water to flow into the accumulator system directly from the surrounding ocean (1) with the hydrostatic water pressure (PT) corresponding to the water depth,
a common generator (36) located at the water inlet (34), wherein the common generator (36) converts the potential energy of the previously displaced water column back into electrical energy when the water flows in with the hydrostatic water pressure (PT) corresponding to the water depth (T),
a base body (40) for accommodating the pressure vessels (20), the pump (16) and the generator (36),
electric lines (12) to transport the electrical energy from the ocean surface to the underwater pumped storage power plant (6) and back,
wherein the pressure vessels (20) are pressure resistant such that they can be pumped empty by means of the pump (16) and be resistant to deformation from the hydrostatic water pressure (PT) at the ocean floor (8),
wherein the pressure vessels are connected to one another by a sump (24), the sump constituting the lowest or at least one of the lowest points of the accumulator system,
wherein the water outlet (35) is located at the sump, and
wherein the pressure vessels (20) and/or the base body (40) are designed such, that in an emptied state are lighter than water and thus can float on the ocean surface so that these components can be brought to the installation site while floating and can be sunk at the installation site.

2. Underwater pumped storage power plant according to the preceding claim,

wherein the connection of the pressure vessels (20) to the sump (24) has at least one shutoff valve (26) for disconnecting at least one of the pressure vessels (20) from the accumulator system.

3. Underwater pumped storage power plant according to one of the preceding claims, further comprising

at least one pump-turbine unit (60) that is capable of being decoupled from the accumulator system, which unit accommodates at least the water inlet (34), the water outlet (35), the common pump (16) and the generator (36), as well as the electrical installation, so that the pump-turbine unit (60) can be brought separately to the ocean surface for maintenance purposes.

4. Underwater pumped storage power plant according to one of the preceding claims,

wherein the pump (16) is a common pump,
wherein the common pump and the common generator (36) form a reversible pump-turbine, and wherein the pump-turbine is located at a combined water inlet and water outlet (34, 35).

5. Underwater pumped storage power plant according to one of the preceding claims,

wherein the common accumulator volume comprises a plurality of cylindrical pressure vessels (20) lined up in a row and connected to one another and/or
wherein the pressure vessels (20) are pipe sections, and wherein the wall thickness of the pipe sections is chosen to be sufficiently great that the pipe sections withstand the water pressure at the ocean floor (8).

6. Underwater pumped storage power plant according to one of the preceding claims, wherein the pressure vessels (20) are internal pressure vessel elements (19), and wherein an integrated accumulator complex (20a) is made of closely packed pressure vessel elements (19) in the form of pipes, and the hollow spaces between the pipes are filled with a filler in order to stabilize the integrated accumulator complex and to weight the accumulator system with a filler mass.

7. Underwater pumped storage power plant according to one of the preceding claims,

wherein the base body (40) connects the accommodated pressure vessels (20) to the pump (16) through an integral main passage (42) in the interior of the base body (40) so that the pressure vessels (20) are connected to one another through the base body (40), and the pressure vessels (20) form a common pressure vessel volume connected through the base body.

8. Underwater pumped storage power plant according to the preceding claim,

wherein the base body (40) has feet (46) for stable and secure support of the base body on the ocean floor (8) and/or
wherein the pressure vessels (20) and/or the base body (40) have self-sealing connection couplings (23) for detachably connecting the pressure vessels (20) to the base body (40) and/or directly to additional pressure vessels (21).

9. Underwater pumped storage power plant according to one of claims 3 through 8,

wherein the base body (40) or the decoupleable pump-turbine unit (60) includes redundant pumps and valves and/or a cleaning system for automatic cleaning of the water inlets and water outlets (34, 35).

10. Underwater pumped storage power plant according to one of the preceding claims,

wherein the pressure vessels (20) and/or the base body (40) have hollow spaces (38) for filling with weighting material and/or
wherein the pressure vessels (20) and/or the base body (40) have an internal supporting framework for additional reinforcement.

11. Power supply network comprising:

a plurality of primary power plants that produce fluctuating electrical energy over time, such as wind power stations (2) and/or photovoltaic systems (3),
at least one underwater pumped storage power plant (6) according to one of the preceding claims,
a plurality of consumers (14) of electrical energy,
a network of electric lines (12, 50) that connects the consumers, the at least one underwater pumped storage power plant, and the primary power plants with one another so that when there is an energy surplus from the primary power plants, the electrical energy generated by the primary power plants is temporarily reversibly stored by the at least one underwater pumped storage power plant, and at times of high demand, electrical energy is recovered, and the recovered electrical energy can be supplied to the consumers.

12. Method for temporary reversible storage of electrical energy from primary power plants, such as wind power stations (2) and/or photovoltaic systems (3), having an underwater pumped storage power plant (6) with at least two artificial pressure vessels (20) that can be filled with water and that have been sunk to the ocean floor, and wherein the pressure vessels are connected to one another by a sump (24), the sump constituting the lowest or at least one of the lowest points of the accumulator system,

wherein the pressure vessels (20) are pressure-resistant such that they can be pumped empty and be resistant to deformation from the hydrostatic water pressure (PT) at the ocean floor (8),
wherein, to store the electrical energy, water is pumped out of the underwater pumped storage power plant (6) directly into the surrounding ocean with the hydrostatic water pressure (PT) corresponding to the water depth, wherein electrical energy is converted into potential energy corresponding to the water column at the water depth (T),
wherein the water outlet (35) is located at the sump (24), and
wherein, to recover the electrical energy, water flows directly from the surrounding ocean with the hydrostatic water pressure (PT) corresponding to the water depth (T) into the underwater pumped storage power plant (6), which converts the potential energy corresponding to the hydrostatic water pressure (PT) of the water column at the water depth into electrical energy by means of a generator (36),
wherein, by means of electrical lines (12), the electrical energy is conducted from the ocean surface down to the underwater pumped storage power plant (6) for temporary reversible storage and is conducted back to the ocean surface again from the underwater pumped storage power plant (6) for consumption,
further comprising a base body (40) for accommodating the at least two pressure vessels (20), the pump (16) and the generator (36),
wherein the pressure vessels (20) and/or the base body (40) are designed such, that in an emptied state are lighter than water and thus can float on the ocean surface so that these components can be brought to the installation site while floating and can be sunk at the installation site.

13. Method according to the preceding claim,

wherein the underwater pumped storage power plant (6) is initially tared so that its mass is less than the mass of the displaced water so that the underwater pumped storage power plant (6) initially floats, and the mass of the underwater pumped storage power plant (6) is increased at the site where it is to be sunk by pouring bulk material and/or ballast water into the base body (40) and/or the pressure vessels (20) such that the mass of the underwater pumped storage power plant (6) becomes greater than the mass of the displaced water, and the underwater pumped storage power plant (6) sinks and comes to rest on the ocean floor (8).

14. Method for manufacturing an underwater pumped storage power plant according to one of the Claims 1 through 10, comprising the steps:

manufacturing an unfinished shell of the base body (40) in a dock or a harbor,
pouring in a filler (41) into the base body (40), placing, in the dock or harbor, pressure vessels (20) onto the base body (40),
wherein the base body (40) is manufactured such, that it always barely floats, wherein the mass of the underwater pumped storage power plant can be increased such, that the mass of the underwater pumped storage power plant becomes greater than the mass of the displaced water and that the underwater pumped storage power plant sinks and comes to rest at the ocean floor (8).

## Revendications

1. Centrale sous-marine à accumulation par pompage (6) destinée au stockage intermédiaire temporaire réversible d'énergie électrique provenant d'autres centrales électriques, notamment d'installations éoliennes (2) et/ou d'installations photovoltaïques (3), comprenant
un système d'accumulation de pression à structure modulaire, comportant au moins deux réservoirs sous pression (20) qui peuvent être remplis avec de l'eau et forment un volume d'accumulation de pression commun,
une sortie d'eau (35) destinée à laisser l'eau s'écouler du système d'accumulation de pression, directement dans la mer environnante (1), à l'encontre de la pression d'eau hydrostatique (PT) correspondant à la profondeur d'eau (T),
une pompe (16) disposée sur la sortie d'eau (35) et destinée à pomper l'eau hors du système d'accumulation de pression, dans la mer environnante, sachant que lors de l'évacuation de l'eau par pompage, à l'encontre de la pression d'eau hydrostatique (PT) de la mer environnante (1), la pompe (16) transforme de l'énergie électrique en énergie potentielle correspondante de la colonne d'eau déplacée,

une admission d'eau (34) destinée à laisser l'eau s'écouler dans le système d'accumulation de pression, directement depuis la mer environnante (1), avec la pression d'eau hydrostatique (PT) correspondant à la profondeur d'eau, un générateur (36) commun disposé sur l'admission d'eau (34), sachant que lorsque l'eau entre avec la pression d'eau hydrostatique (PT) de la profondeur d'eau (T), le générateur (36) commun transforme de nouveau en énergie électrique l'énergie potentielle de la colonne d'eau précédemment déplacée, un corps formant fond destiné à recevoir les réservoirs sous pression (20), la pompe (16) et le générateur (36), des lignes électriques (12) destinées au transport de l'énergie électrique depuis la surface de la mer à la centrale sous-marine à accumulation par pompage (6) et inversement, les réservoirs sous pression (20) présentant une résistance à la pression telle qu'ils conservent une forme stable vis-à-vis de la pression d'eau hydrostatique (PT) sur le fond de mer (8) lorsqu'ils sont vidés par pompage au moyen de la pompe (16), les réservoirs sous pression étant reliés entre eux par un puisard (24) qui constitue le point le plus bas ou au moins un des points les plus bas du système d'accumulation de pression, la sortie d'eau (35) étant disposée sur le puisard, et les réservoirs sous pression (20) et/ou le corps formant fond (40), à l'état vidangé, étant plus légers que l'eau et flottant ainsi sur la surface de la mer, de sorte que ces éléments peuvent être transportés en flottant jusqu'au lieu de montage où ils peuvent être immergés.

2.  Centrale sous-marine à accumulation par pompage selon la revendication précédente, dans laquelle la liaison des réservoirs sous pression (20) au puisard (24) présente au moins une vanne d'arrêt (26) destinée à séparer au moins un des réservoirs sous pression (20) du système d'accumulation de pression.

3.  Centrale sous-marine à accumulation par pompage selon l'une des revendications précédentes, comprenant en outre au moins une unité de pompe-turbine (60) qui peut être découplée du système d'accumulation de pression et contient au moins l'admission d'eau (34), la sortie d'eau (35), la pompe (16) commune et le générateur (36) ainsi que l'installation électrique, de sorte que l'unité de pompe-turbine (60) peut être amenée séparément à la surface de la mer, à des fins d'entretien.

4.  Centrale sous-marine à accumulation par pompage selon l'une des revendications précédentes, dans laquelle la pompe (16) est une pompe commune, la pompe commune et le générateur (36) commun constituant une pompe-turbine réversible, et la pompe-turbine étant disposée sur une admission d'eau et une sortie d'eau combinée (34, 35).

5.  Centrale sous-marine à accumulation par pompage selon l'une des revendications précédentes, dans laquelle le volume d'accumulation de pression commun comprend une pluralité de réservoirs sous pression (20) cylindriques disposés les uns à la suite des autres et reliés les uns aux autres, et/ou dans laquelle les réservoirs sous pression (20) sont des tronçons de tube, et/ou dans laquelle l'épaisseur de paroi des tronçons de tube est suffisamment grande pour que les tronçons de tube résistent à la pression d'eau sur le fond de la mer (8).

6.  Centrale sous-marine à accumulation par pompage selon l'une des revendications précédentes, dans laquelle les réservoirs sous pression (20) sont des éléments internes de réservoir sous pression (19), et dans laquelle un complexe d'accumulation de pression (20a) intégré est formé à partir d'éléments de réservoir sous pression (19) très proches les uns des autres, sous forme de tronçons de tube, et les espaces formés entre les tubes sont remplis avec une masse de remplissage, en vue de la stabilisation du complexe d'accumulation de pression intégré et en vue du lestage du système d'accumulation de pression.

7.  Centrale sous-marine à accumulation par pompage selon l'une des revendications précédentes, dans laquelle le corps formant fond (40) relie à la pompe (16) les réservoirs sous pression (20) qu'il supporte, par l'intermédiaire d'un conduit principal (42) intégral à l'intérieur du corps formant fond (40), de sorte que les réservoirs sous pression (20) sont reliés entre eux par l'intermédiaire du corps formant fond (40), et les réservoirs sous pression (20) constituent un volume d'accumulation sous pression commun relié par le corps de fond.

8.  Centrale sous-marine à accumulation par pompage selon la revendication précédente, dans laquelle le corps formant fond (40) présente des pieds (46) destinés à l'appui stable et sûr du corps de fond sur le fond de mer (8) et/ou dans laquelle les réservoirs sous pression (20) et/ou le corps formant fond (40) présentent des couplages de raccordement (23) auto-étanches destinés à la liaison séparable des réservoirs sous pression (20) avec le corps formant fond (40) et/ou directement avec d'autres réservoirs sous pression (20).

9.  Centrale sous-marine à accumulation par pompage selon l'une des revendications 3 à 8, dans laquelle le corps formant fond (40) ou l'unité de pompe-turbine (60) découplable comporte des pompes et des vannes redondantes et/ou un dispositif de nettoyage destiné au nettoyage automatique des admissions d'eau et des sorties d'eau (34, 35).

10. Centrale sous-marine à accumulation par pompage selon l'une des revendications précédentes, dans laquelle les réservoirs sous pression (20) et/ou le corps formant fond (40) présentent des cavités (38) destinées au remplissage avec du matériau de lestage et/ou le corps formant fond (40) présente une structure porteuse interne pour un raidissement supplémentaire.

11. Réseau d'alimentation électrique, comprenant :

une pluralité de centrales primaires qui produisent de l'énergie électrique de façon fluctuante dans le temps, en particulier des installations éoliennes (2) et/ou des installations photovoltaïques (3), au moins une centrale sous-marine à accumulation par pompage (6) selon l'une des revendications précédentes, une pluralité de points de consommation (14) d'énergie électrique, un réseau de lignes électriques (12, 50) qui relie entre eux les points de consommation, la centrale sous-marine à accumulation par pompage, au nombre d'au moins une, et les centrales primaires, de sorte que lors de périodes d'excédents d'énergie provenant des centrales primaires, l'énergie électrique produite par les centrales primaires peut être stockée temporairement de façon réversible par la centrale sous-marine à accumulation par pompage, au nombre d'au moins une, et peut être récupérée pendant des périodes de demande forte d'énergie électrique, et l'énergie électrique récupérée peut être transmise aux points de consommation.

12. Procédé de stockage intermédiaire temporaire réversible d'énergie électrique provenant de centrales primaires (2, 3), en particulier d'installations éoliennes (2) et/ou d'installations photovoltaïques (3), avec une centrale sous-marine à accumulation par pompage (6) dotée d'au moins deux réservoirs sous pression (20) artificiels, pouvant être remplis avec de l'eau et immergés sur le fond de la mer (8), qui sont reliés entre eux par un puisard (24) qui constitue le point le plus bas ou au moins un des points les plus bas du système d'accumulation de pression,
les réservoirs sous pression (20) présentant une résistance à la pression telle qu'ils puissent être vidés par pompage en conservant une forme stable vis-à-vis de la pression d'eau hydrostatique (PT) sur le fond de la mer (8),
sachant que pour le stockage de l'énergie électrique, l'eau est pompée hors de la centrale sous-marine à accumulation par pompage (6) au moyen d'une sortie d'eau (35), directement dans la mer environnante, avec la pression d'eau hydrostatique (PT) correspondant à la profondeur d'eau, l'énergie électrique étant transformée en énergie potentielle correspondant à la colonne d'eau à la profondeur d'eau (T),
sachant que la sortie d'eau (35) est disposée sur le puisard (24), et sachant que pour la récupération de l'énergie électrique, l'eau s'écoule directement de la mer environnante dans la centrale sous-marine à accumulation par pompage (6), avec la pression d'eau hydrostatique (PT) correspondant à la profondeur d'eau (T), l'énergie potentielle, correspondant à la pression d'eau hydrostatique (PT) de la colonne d'eau à la profondeur d'eau, est transformée en énergie électrique au moyen d'un générateur (36), sachant que l'énergie électrique est transmise au moyen de lignes électriques (12) depuis la surface de la mer vers le fond, jusqu'à la centrale sous-marine à accumulation par pompage, en vue du stockage intermédiaire temporaire réversible, et, pour la consommation, est retransmise de la centrale sous-marine à accumulation par pompage à la surface de la mer,
comprenant en outre un corps formant fond destiné à recevoir les réservoirs sous pression (20), la pompe (16) et le générateur (36),
les réservoirs sous pression (20) et/ou le corps formant fond (40), à l'état vidangé, étant plus légers que l'eau et flottant ainsi sur la surface de la mer, de sorte que ces éléments peuvent être transportés en flottant jusqu'au lieu de montage où ils peuvent être immergés.

13. Procédé selon la revendication précédente, selon lequel la centrale sous-marine à accumulation par pompage (6) est d'abord équilibrée de manière à ce que sa masse soit plus faible que la masse de l'eau déplacée, de sorte que la centrale sous-marine à accumulation par pompage (6) flotte d'abord et la masse de la centrale sous-marine à accumulation par pompage est augmentée, sur le lieu d'immersion, par remplissage du corps formant fond (40) et/ou des réservoirs sous pression (20) avec des matériaux en vrac et/ou de l'eau de lestage, de manière telle que la masse de la centrale sous-marine à accumulation par pompage devienne supérieure à la masse de l'eau déplacée et la centrale sous-marine à accumulation par pompage soit immergée et vienne se poser sur le fond de la mer (8).

14. Procédé de réalisation d'une centrale sous-marine à accumulation par pompage selon l'une des revendications 1 à 10, comprenant les étapes suivantes :

réalisation d'une ébauche du corps formant fond (40), dans une cale sèche ou un port,

introduction d'une masse de remplissage (41) dans le corps formant fond (40),

mise en place de réservoirs sous pression (20) sur le corps formant fond (40), dans la cale sèche ou le port, le corps formant fond (40) étant fabriqué de manière telle qu'il soit toujours juste flottant, la masse de la centrale sous-marine à accumulation par pompage pouvant être augmentée par remplissage du corps formant fond (40) et/ou des réservoirs sous pression (20) avec des matériaux en vrac et/ou de l'eau de lestage, de manière telle que la masse de la centrale sous-marine à accumulation par pompage devienne supérieure à la masse de l'eau déplacée et la centrale sous-marine à accumulation par pompage soit immergée et vienne se poser sur le fond de la mer (8).

Fig. 1

EP 2 776 705 B1

Fig. 2

Fig. 3

EP 2 776 705 B1

Fig. 4

Fig. 5

Fig. 6

Fig. 7

Fig. 8

EP 2 776 705 B1

Fig. 9

EP 2 776 705 B1

## Fig. 10

Fig. 11

EP 2 776 705 B1

Fig. 12

40

Fig. 13

40

41

43

43

42

Fig. 14

Fig. 15

Fig. 16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011013329
- WO 2011112561 A
- WO 2009111861 A